# FASCICULE DE BREVET EUROPEEN

(11) **EP 1 664 833 B1**
(45) Date de publication et mention de la délivrance du brevet: **13.03.2013**
(21) Numéro de dépôt: 04786346.9
(22) Date de dépôt: 23.08.2004
(51) Int. Cl.: H04W 64/00, G01S 5/02

(54) **PROCEDE POUR DETECTER LA PRESENCE OU L'ABSENCE D'UN TERMINAL MOBILE SUR UN CHEMIN**
VERFAHREN ZUR ERKENNUNG DER ANWESENHEIT ODER ABWESENHEIT EINES MOBILEN ENDGERÄTS AUF EINEM WEG
METHOD OF DETECTING THE PRESENCE OF ABSENCE OF A MOBILE TERMINAL ON A PATH

(30) Priorité: 17.09.2003 FR 0350554
(43) Date de publication de la demande: 07.06.2006
(73) Titulaire: Alcatel Lucent, 75007 Paris (FR)
(72) Inventeur: DUPONT, Marc, F-76220 Dampierre en Bay (FR); DEMATHIEU, Jean-Georges, F-92340 Bourg-La-Reine (FR)
(74) Mandataire: Sciaux, Edmond
(86) Numéro de dépôt international: PCT/FR2004/002182
(87) Numéro de publication internationale: WO 2005/029118

(56) Documents cités:
- EP-A- 1 022 578
- DE-A- 10 118 777
- GB-A- 2 329 801
- US-B1- 6 393 294
- GASPARD I ET AL: "Position assignment in digital cellular mobile radio networks (e.g. GSM) derived from measurements at the protocol interface" VEHICULAR TECHNOLOGY CONFERENCE, 1997, IEEE 47TH PHOENIX, AZ, USA 4-7 MAY 1997, NEW YORK, NY, USA,IEEE, US, 4 mai 1997 (1997-05-04), pages 592-596, XP010228911 ISBN: 0-7803-3659-3

## Description

### DOMAINE TECHNIQUE

L'invention se situe dans le domaine des procédés permettant de reconnaître qu'un terminal mobile se trouve sur un chemin à parcourir prédéterminé. Elle concerne en particulier des procédés utilisant des émissions de stations fixes utilisées dans les réseaux de téléphonie mobile.

### ETAT DE LA TECHNIQUE ANTERIEURE

Il est connu de calculer la localisation (coordonnées géographiques, par exemple le couple (latitude, longitude)) du lieu où se trouve un terminal mobile en utilisant des stations fixes d'un réseau radio, puis de comparer cette localisation à celle de la zone dans laquelle se trouve le terminal mobile.

Les solutions connues offrent une précision moins bonne que 300 mètres en moyenne pour les moins élaborées. Il s'agit de celles où l'on reconnaît simplement une cellule d'un réseau dans laquelle se trouve le terminal mobile. (ex : Cell-ID). Elles offrent une précision inférieure à 50 mètres en moyenne pour les plus avancées telles que celles fondées sur la technologie OTD (Observed Time Difference). Il s'agit de technologies dans lesquelles on prend en compte une différence de temps de latence entre des liaisons avec les différentes stations radio accessibles de l'endroit où se trouve le terminal mobile. Ces solutions présentent cependant l'inconvénient de nécessiter des modifications importantes du réseau.

On connaît aussi des solutions utilisées notamment en navigation aérienne ou maritime, dans lesquelles des appareils d'émission radio sous forme de balise et des appareils embarqués dédiés permettent de localiser l'appareil embarqué. On peut citer à ce sujet la triangulation goniométrique, les radio compas ou les TACAN, ou les systèmes de positionnement par satellite tel que le GPS (Global Positionnement System) ou encore le NAVSTAR.

Par le document DE 101 18 777 on connaît un procédé de détermination de position d'un appareil radio mobile utilisant un réseau radio mobile avec une multitude de stations radio qui émettent des signaux radio recevables par l'appareil radio mobile. Le procédé comporte un étape préliminaire consistant en une mesure des signaux de plusieurs stations radio en une multitude de lieux, dont la position géographique est connue avec précision. Typiquement ces mesures sont faites par un fournisseur de service, de façon à couvrir systématiquement toute une ville. Chaque mesure est un profil niveau de réception / fréquence, et ce profil est enregistré dans une banque de données de profils, dans laquelle des informations de position sont associées à chaque profil. Au cours d'une phase d'exploitation, un appareil radio mobile, situé en un lieu dont la position est à déterminer, reçoit les signaux de plusieurs stations radio et il mesure un profil de stations dépendant du lieu. Le procédé consiste alors à déterminer la position par une comparaison du profil de stations reçu, avec les profils de stations de référence de la banque de données.

On peut utiliser ce procédé de localisation pour reconnaître si un terminal mobile se trouve ou non sur un chemin prédéterminé : Il faut comparer électroniquement la position du terminal, déterminée par ce procédé de localisation, avec une carte électronique du chemin, mémorisant les positions d'une suite de point constituant le chemin prédéterminé.

Ce procédé connu a pour inconvénient d'être très lourd à mettre en oeuvre, puisqu'il implique de faire des mesures de niveau de réception / fréquence systématiquement sur un très grand nombre de points (typiquement toute une ville), en enregistrant avec précision la position du lieu pour chaque mesure. Il nécessite aussi de connaître avec précision les positions d'une suite de point constituant le chemin prédéterminé, par exemple en parcourant le chemin avec un récepteur GPS capable d'enregistrer une suite de positions.

EP 1022578 propose un procédé de détermination d'une position qui repose sur l'existence d'une carte.

US-B-6 393 2941 décrit un procédé de détermination d'une position qui nécessite une base de données d'empreintes radio associée à des localisations uniques.

### EXPOSÉ DE L'INVENTION

La présente invention a pour but de proposer un procédé qui soit plus léger à mettre en oeuvre, et qui permette néanmoins de savoir avec précision si un terminal mobile est ou non dans une aire ou sur un chemin prédéterminé, en faisant appel uniquement à des stations radio fixes a priori non prévues pour une telle localisation et ceci, au moins dans une forme basique de réalisation de l'invention sans modification logicielle ou matérielle des stations du réseau ou de serveur les pilotant.

Le procédé selon l'invention permet aussi la détection de présence, d'entrée, ou de sortie, d'une zone prédéterminée ; et donc permet de réaliser d'autres applications, telles que par exemple la reconnaissance que le terminal mobile se trouve dans une zone de tarification par exemple proche du domicile d'un abonné. L'invention apporte ainsi les solutions techniques pour cette application qui présente un intérêt commercial fort.

Selon l'invention on décrit, dans une phase d'apprentissage, un chemin, par les caractéristiques du champ radio observé durant le parcours de ce chemin, en restant exclusivement sur ce chemin. Il n'est donc pas nécessaire d'arpenter systématiquement toute une ville, et il n'est pas nécessaire de connaître la position géographique de chaque point de ce chemin. Il n'est pas nécessaire, non plus, que le terminal ait reçu préalablement des informations sur les stations de base.

Les caractéristiques du champ radio sont enregistrées périodiquement le long du chemin. Les caractéristiques du champ résultent des émissions radio produite par exemple par les stations d'un réseau de téléphonie mobile. On compare ensuite au cours de parcours d'exploitation du chemin les caractéristiques du champ observé le long de ce parcours, avec les caractéristiques enregistrées. On en déduit si le terminal est sur le chemin ou hors du chemin (mais on ne sait pas en quel point du chemin, ou de la ville). Ce procédé est plus facile à mettre en oeuvre mais permet néanmoins d'obtenir plus de précision que les solutions existantes car il évite le calcul de la localisation géographique du terminal mobile. Ce calcul nécessiterait des approximations (dispersions et calculs statistiques) et donc une perte importante d'information entraînant une perte de précision.

Il convient de noter que lorsqu'il est parlé de chemin selon l'invention, il peut s'agir soit d'un parcours linéaire permettant d'aller d'un point de départ à un point d'arrivée, soit d'un parcours sinueux permettant par exemple de balayer une grande partie d'un aire. Typiquement le chemin au sens propre sera le trajet suivi par un écolier pour se rendre du domicile à son école ou le chemin de retour. Le cas du chemin sinueux sera celui par exemple d'une aire de jeux qu'un enfant peut parcourir en tous sens sans sortir de l'aire. Dans la phase d'apprentissage le chemin pourra consister en un chemin parcourant l'aire par exemple en spirale ou selon des parcours rectilignes successifs, décalés les uns par rapport aux autres jusqu'à avoir parcouru sensiblement toute l'aire. Il pourra aussi consister en un chemin suivant tout ou partie des voies matérielles de circulation de l'aire. Dans tous les cas, l'enregistrement des données pendant la phase d'apprentissage est réalisé exclusivement sur le chemin.

- A toute ces fins l'invention est relative à un procédé de suivi d'un chemin à parcourir par un terminal mobile selon la revendication 1.

Ainsi selon l'invention on crée des enregistrements successifs d'échantillons, chaque échantillon correspondant à une fréquence reçue lors de cet enregistrement. Un échantillon d'enregistrement comporte pour une fréquence, une indication permettant de reconnaître qu'il s'agit de cette fréquence, par exemple un numéro de canal, et un niveau de réception. D'un point de vue matériel, on note que les parties mobiles de téléphone mobile sont déjà pourvues de moyens de réception pour balayer une ou plusieurs bandes de fréquence susceptibles d'être reçues en fonction des fréquences émises par les stations radio participant au réseau de téléphonie. Ces indications peuvent déjà apparaître sur un écran de la partie mobile, par exemple sous forme d'un numéro de canal pour la fréquence ou d'un coefficient représentatif du niveau de réception. Il n'est donc pas nécessaire de modifier sur ce point un terminal mobile. Par contre il faut que le terminal mobile soit équipé d'un processeur programmé pour mémoriser ces informations, dans une mémoire d'exploitation. La mémoire d'exploitation peut être soit une mémoire du terminal mobile, soit une mémoire extérieure, par exemple sur un serveur, accessible par la plate-forme d'exploitation. Un programme pour réaliser le procédé selon l'invention peut être mémorisé, de même dans une mémoire de la partie mobile, ou dans la plate-forme d'exploitation. Lorsque le terminal mobile ne comporte pas tous les moyens de mémoire et ou de logiciel pour réaliser le procédé, alors il convient que le processeur soit programmé pour envoyer vers la plate-forme d'exploitation les données qu'il est prévu de traiter au niveau ce cette plate-forme et pour recevoir des données en provenance de la plate-forme.

Dans un mode de réalisation du procédé le critère de discrimination entre un groupe ordinaire et un groupe remarquable est réalisé de la façon suivante : il convient tout d'abord qu'au moins un groupe remarquable ait été créé. Il pourra s'agir par exemple du premier groupe enregistré. La détermination d'un point remarquable suivant se fera par rapport à un groupe remarquable précédent, par exemple le groupe remarquable immédiatement précédent. Par immédiatement précédent on veut dire que le groupe remarquable suivant et le groupe remarquable suivant auront des rangs de groupe remarquable r et r+1, respectivement. Le groupe courant d'enregistrement sera dit remarquable si l'une ou plusieurs des conditions suivantes sont réalisées.
- selon une première condition le nombre de fréquences reçues pour le groupe courant qui sont identiques à des fréquences reçues aussi pour le groupe remarquable de comparaison, est inférieur à un pourcentage a% fixé du nombre de fréquence reçu pour ledit groupe remarquable de comparaison,
- selon une seconde condition le nombre de fréquences reçues pour le groupe courant, qui sont différentes des fréquences reçues lors dudit enregistrement remarquable de comparaison est supérieur à un pourcentage b% fixé du nombre de fréquence reçu pour ledit groupe remarquable de comparaison,
   selon une troisième condition, il n'existe pas un pourcentage minimum c% de fréquences identiques entre le groupe remarquable de comparaison et le groupe courant pour lequel une variation de niveau de réception est inférieure à un seuil prédéterminé entre un niveau de réception associé à une fréquence du groupe courant et un niveau de réception associé à la même dite fréquence de l'un des échantillons dudit enregistrement remarquable de comparaison. Le groupe sera dit ordinaire dans le cas contraire. C'est à dire si une ou plusieurs des conditions suivantes sont réalisées.- selon la première condition le nombre de fréquences reçues pour le groupe courant qui sont identiques à des fréquences reçues aussi pour le groupe remarquable de comparaison, est supérieur au pourcentage a% fixé du nombre de fréquences reçues pour ledit groupe remarquable de comparaison,
- selon la seconde condition le nombre de fréquences reçues pour le groupe courant, qui sont différentes des fréquences reçues lors dudit enregistrement remarquable de comparaison est inférieur audit pourcentage b% fixé du nombre de fréquences reçues pour ledit groupe remarquable de comparaison,
   selon la troisième condition il existe pour un pourcentage minimum c% de fréquences identiques entre le groupe remarquable de comparaison et le groupe courant une variation de niveau de réception, de préférence en pourcentage, inférieure à un seuil prédéterminé entre un niveau de réception associé à une fréquence du groupe courant et un niveau de réception associé à la même dite fréquence de l'un des échantillons dudit enregistrement remarquable de comparaison.

Un exemple sera pris pour guider le lecteur dans les choix des valeurs des pourcentage a et b.

Par exemple, pour le point remarquable de comparaison on a enregistré quatre échantillons correspondant à quatre fréquences de réception. Si a% est au minimum égal à 75% et strictement inférieur à 100%, alors le groupe courant sera remarquable si au moins une fréquence du groupe courant n'est pas identique à une fréquence du groupe remarquable de comparaison. Pour le même nombre quatre de fréquences reçues pour le point remarquable de comparaison, il faudra que b% soit au moins égal à 25% pour que l'apparition d'une fréquence différente conduise à un groupe remarquable. Comme expliqué plus haut, dans le procédé selon l'invention, un groupe d'échantillons est discriminé comme remarquable par comparaison avec un groupe remarquable précédent. Ce critère n'est donc pas applicable pour un premier groupe remarquable. Pour le premier groupe remarquable, il pourra être décidé qu'il est constitué par le premier enregistrement réalisé ou encore par un choix d'un groupe d'échantillons parmi les i premiers groupes enregistrés, le choix résultant d'une comparaison des caractéristiques de niveau d'une fréquence identique figurant dans les i échantillons, ou de nombres de fréquences identiques ou différentes reçues au cours des i enregistrements.

Dans un mode de réalisation le ou les groupe(s) de rang inférieur à n avec lequel ou lesquels une comparaison du groupe de rang n est effectuée pour déterminer que ledit groupe de rang n est ou non un groupe remarquable est ou sont un groupe ou des groupes remarquables, un premier groupe remarquable de rang r le plus petit ayant été déterminé autrement que par une comparaison avec des groupes remarquables.

Dans un mode de réalisation le premier groupe remarquable est le premier groupe enregistré.

Dans un mode de réalisation la détermination d'un groupe remarquable est effectuée par une comparaison entre le groupe courant et le groupe remarquable précédent d'échantillons, ayant le rang r de groupe remarquable le plus élevé, c'est à dire comme vu plus haut le groupe remarquable immédiatement précédent.

Dans un mode de réalisation la détermination d'un groupe remarquable est effectuée par des comparaisons successives deux à deux des échantillons des i derniers groupes consécutifs enregistrés le dernier groupe d'échantillons enregistré ayant un rang n, et le premier des i derniers groupes ayant le rang n-i, un ou plusieurs groupes remarquables pouvant résulter de cette comparaison.

Dans un mode de réalisation le procédé comporte en outre une phase préalable d'enregistrement dans une mémoire d'exploitation accessible par la plate-forme d'exploitation, d'informations de corrélation relatives à chacune des stations d'émission qui peuvent être reçues à l'intérieur d'une grande zone géographique. Cette grande zone englobe au minimum une petite zone géographique dans laquelle se trouve le chemin à parcourir. Les informations de corrélation permettent seule, ou éventuellement en combinaison avec d'autres informations préenregistrées de corrélation, de corréler sur le chemin à parcourir, une fréquence reçue avec l'identité de la station d'émission de cette fréquence.

Dans ces conditions, le procédé comporte dans la phase d'apprentissage,
- une corrélation pour les groupes remarquables d'échantillons entre les niveaux et les fréquences reçues d'une part, et les informations de corrélation enregistrées au cours de la phase préalable, cette corrélation permettant de relier chaque fréquence et niveau associé dudit groupe remarquable avec une identité de station les ayant émis. Cette information obtenue à partir du groupe remarquable courant d'échantillons est enregistrée de façon additionnelle pour chacun des échantillons composant ensemble le groupe courant remarquable de pₖ échantillons.

La phase préalable n'est en général pas une phase spécifique au procédé de l'invention, puisque les stations de réseaux de téléphonie mobile diffusent en général de telles informations telles qu'une identité globale de la station, permettant d'identifier la station et de lui adjoindre des valeurs relatives à des caractéristiques techniques ou géographiques de la station. Certaines de ces informations ne sont cependant pas accessibles par une carte de programmation qui peut être adjointe au terminal mobile pour réaliser une mémorisation ou des applications particulière, par exemple une carte SIM (Subscriber Identity Module). Cette carte reçoit l'identification de la station du réseau qui est la cellule serveuse mais peut ne recevoir en ce qui concerne les autres stations que l'on peut recevoir, que la fréquence d'émission, le niveau de réception et le code d'identification couleur qui permet de distinguer entre elles toutes les stations du réseau qui émettent sur la même fréquence. La carte SIM peut également recevoir des valeurs de coefficient C1 et C2 dont la valeur ou la variation de valeur est utilisée par le terminal mobile pour déterminer si un changement de cellule serveuse doit être effectué.

Dans un mode de réalisation, comportant une phase préalable, l'une des informations de corrélation reçues par le terminal mobile est une information relative à l'identité d'une station qui rend un service particulier. Il pourra s'agir par exemple de l'identité de la station servant de cellule serveuse, c'est à dire qui est la station assurant un premier relais entre le terminal mobile et le reste du réseau. Dans ce cas, en plus des autres critères on pourra reconnaître comme remarquable un groupe où un tel changement de station qui rend ledit service particulier aura été reconnu.

Dans un mode de réalisation comportant une phase préalable on enregistre au cours de cette phase préalable des valeurs ou des plages de valeurs de paramètres définissant ensemble un espace de contexte, et que au cours des phases d'apprentissage ou d'exploitation,
on détermine une situation actuelle dans l'espace de contexte et
l'on modifie la fréquence des enregistrements suivants en fonction de la situation actuelle dans l'espace de contexte.

Les valeurs de plage de contexte pourront être par exemple, l'une ou plusieurs des valeurs ou plages de valeurs relatives aux paramètres ci-après
valeurs résiduelles de charge de batterie du terminal mobile,
des valeurs définissant une qualité de la localisation,
des plages de valeur de quantité de mémoire restante,

Il convient de noter que l'espace de contexte peut être défini lors de la conception de l'application implémentant le procédé selon l'invention où la fréquence retenue pour les enregistrements pourra être une fonction de valeurs moyennes par exemple pour la charge résiduelle de la batterie, de la quantité de mémoire que l'on sait être disponible pour réaliser l'application et de la qualité que l'on veut attribuer au service et aussi par exemple d'une durée moyenne raisonnable des parcours qui seront exploités en utilisant l'application.

Les prises en compte de la situation de contexte peuvent aussi être effectuées au cours de la phase d'apprentissage ou de la phase d'exploitation pour modifier par exemple la périodicité de la prise d'échantillons au cours de la phase d'apprentissage ou au cours de l'une des phases d'exploitation. Une nouvelle fréquence d'échantillonnage, fonction du Contexte et du profil radio au point remarquable de rang r, peut être calculée, enregistrée dans la mémoire d'exploitation pour le groupe remarquable d'échantillons de rang r et utilisée en phase d'exploitation pour trouver le groupe d'échantillons remarquable de rang r+1.

Dans un mode de réalisation la phase d'apprentissage peut être étendue à plusieurs passages sur le chemin après l'enregistrement initial, de la façon suivante : le mécanisme de détection de sortie de chemin utilisé en phase d'exploitation, dont il sera parlé plus loin plus en détail, est utilisé ici, mais lorsqu'une sortie de chemin est détectée, l'utilisateur est interrogé pour savoir s'il se trouve ou non sur le chemin. S'il confirme qu'il se trouve bien sur le chemin à parcourir, l'interface invite l'utilisateur à cocher une réponse, si la réponse est affirmative, le seuil de variation de niveau est modifié pour les comparaisons de groupes courants avec ce groupe remarquable, afin que la comparaison entre le dernier groupe remarquable et ledit groupe courant soit positive.

En option, la durée depuis le début du trajet lors de l'acquisition d'un groupe remarquable d'échantillons peut aussi être enregistrée dans la mémoire d'exploitation pour ledit groupe remarquable d'échantillons. Dans ce cas dans la phase d'exploitation dont il sera parlé plus loin, une comparaison entre un groupe courant d'échantillons et un groupe remarquable n'est déclarée positive que si non seulement une comparaison positive a été obtenue selon l'un des critères cités mais aussi si la durée écoulée entre le début du parcours et l'instant de l'échantillon courant est égale à la durée écoulée depuis le début du trajet lors de l'acquisition du groupe remarquable avec lequel une comparaison est positive augmentée ou diminuée d'une durée seuil.

En règle générale l'invention sera implémentée sous forme d'un programme informatique comprenant des moyens de code de programme informatique adaptés pour exécuter toutes les étapes du procédé lorsque ledit programme est exécuté sur un ordinateur.

Ledit programme informatique sera incorporé sur un support exploitable par ordinateur.

Il pourra aussi être incorporé sur plusieurs supports, chaque support contenant des instructions exploitables par ordinateur, ces instructions étant adaptées pour exécuter une partie des étapes du procédé, et des instructions de liaison pour envoyer des données ou des instructions vers l'extérieur.

De ce fait l'invention est aussi relative à un support ou ensemble de supports de données et d'instructions numériques, contenant ensemble un programme pour exécuter les étapes du procédé selon l'invention.

### BRÈVE DESCRIPTION DES DESSINS

Un mode de réalisation de l'invention et des variantes seront maintenant décrits en regard des dessins annexés dans lesquels
la figure 1 représente un ensemble de stations radios et une partie mobile d'un réseau GSM de téléphonie mobile,
la figure 2 représente un ensemble de stations radios et un premier exemple de chemin à parcourir,
la figure 3 représente un ensemble de stations radios et un second exemple de chemin à parcourir,

### EXPOSÉ DÉTAILLÉ DE MODES DE RÉALISATION PARTICULIERS

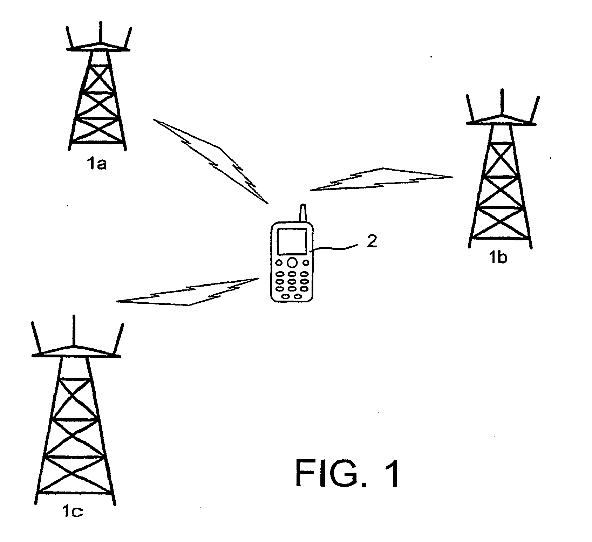

Le procédé a été implémenté sur un terminal mobile 2 d'un réseau GSM représenté schématiquement **figure 1**. Le terminal mobile est pourvu d'une carte SIM (Subscriber Identity Module) non représentée. De façon en elle-même connue une telle carte comporte un microprocesseur en liaison avec une mémoire et un interface permettant de rentrer des données ou un programme. Dans le mode de réalisation expérimental, le programme est enregistré localement sur la carte SIM. Il est naturellement possible d'enregistrer ledit programme ou au moins une partie de celui-ci dans une mémoire éloignée et de prévoir l'envoi de données vers ladite mémoire à partir du terminal mobile.

Le terminal mobile 2 a été représenté dans une position où il reçoit les émissions de trois stations radio la, 1b, et 1c, faisant partie du réseau GSM. Sans modification de la partie mobile 2 équipée de la carte SIM, il est possible de recevoir et de mémoriser au niveau de cette carte, d'une part pour l'une des stations, par exemple la qui est la station ou cellule serveuse, une identité globale GIDa. Cette identité globale lorsqu'elle est corrélée à une table d'information permet de localiser géographiquement la cellule 1a. Pour les deux autres stations 1b et 1c qui ne sont pas cellules serveuses, il est possible de recevoir et de mémoriser au niveau de la carte SIM le couple fréquence et information de couleur appelé aussi identification locale LIDb et LIDc respectivement. Comme expliqué plus haut cette information de couleur est une information permettant de distinguer entre elles toutes les stations d'une zone géographique qui émettent sur la même fréquence. Naturellement il est prévu que deux stations qui émettent sur la même fréquence avec le même code couleur ne se trouvent pas dans la même zone géographique. Il est donc possible lorsqu'on connaît sensiblement la zone géographique où se trouve le terminal mobile par l'identification globale de la cellule serveuse, et d'autre part les identités locales des autres fréquences reçues, de déterminer l'identité globale des autres stations, telles que 1b et 1c.

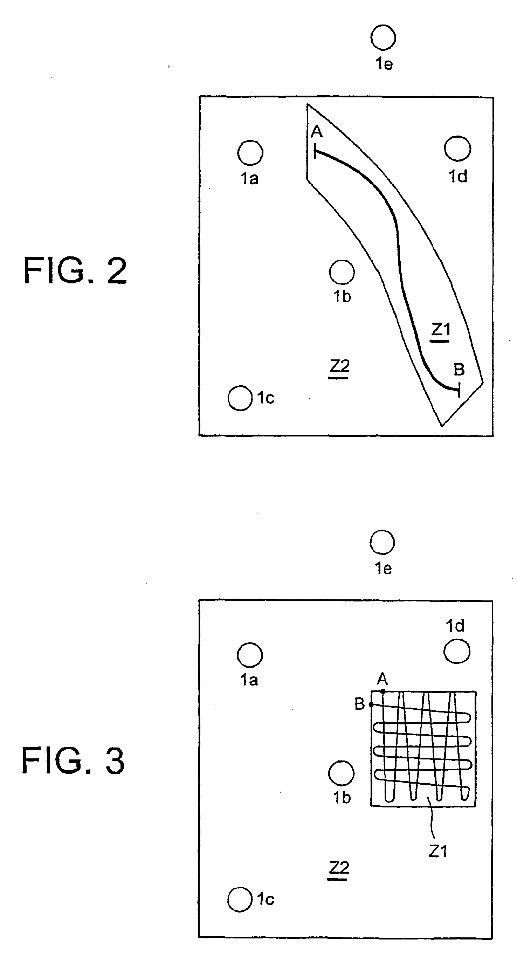

La **figure 2** représente un premier chemin à parcourir, entre deux points A et B. Sur la figure 2 le chemin est linéaire et correspond au cas par exemple où l'on souhaite savoir qu'un enfant est bien sur le chemin qui mène de son domicile A à son école B.

La **figure 3** correspond à un second exemple de chemin à parcourir. Sur la figure 3 le chemin est également linéaire mais il est sinueux et l'on remarque que ce chemin est entièrement situé dans une aire par exemple carrée que l'on peut diviser en case réparties matriciellement en lignes et colonnes. Le chemin consiste à parcourir une première colonne, dans un sens, puis la colonne adjacente dans l'autre sens et ainsi de suite jusqu'à atteindre la dernière colonne. Dans l'exemple représenté on a en outre complété le chemin par un parcours semblable effectué selon les lignes de la matrice. Ce cas correspond au cas où l'on veut savoir par exemple qu'un enfant se trouve à l'intérieur d'une aire de jeux, qu'il peut parcourir en tout sens. Naturellement il n'est pas obligatoire que le chemin soit parcouru selon des lignes et des colonnes, il ne s'agit que d'un exemple. En règle générale on parcourra les voies matérielles existant dans l'aire, par exemple les allées d'un parc.

Dans le cas de la figure 2 et dans celui de la figure 3, le chemin se trouve dans une petite zone géographique Z1. Dans le mode de réalisation ici décrit, pour tirer avantage de la possibilité décrite plus haut de remonter aux identités globales lorsqu'on a les identités locales, on enregistre au préalable des données de corrélation. Ces données sont relatives à des stations radio 1a, 1b, 1c 1d et le. Ces stations sont au minimum celles qui couvrent une grande zone géographique Z2. Il convient que cette grande zone géographique Z2 englobe au minimum la petite zone Z1 où se trouve le chemin à parcourir. Ces données pourront aussi comprendre d'autres stations, couvrant une zone nettement plus importante que la zone Z1 contenant le chemin, permettant ainsi de couvrir d'autres chemins dans d'autres petite zones appartenant à la grande zone couverte. Les données préalablement enregistrées sont dans l'exemple de réalisation ici décrit, les fréquences d'émission sous forme des numéros de canaux sur lesquels travaillent des stations radio, la, 1b 1c 1d et le, les identités globales et locales de ces stations ainsi que leur coordonnées géographiques. Ainsi en corrélant ces données avec les fréquences effectivement reçues et leur identifiant local reçu lors d'un enregistrement effectué en phase d'apprentissage, il sera possible de compléter l'enregistrement d'un échantillon d'un groupe remarquable relatif à une fréquence reçue par l'identité globale et la localisation géographique de la station reçue. Cette sous partie du procédé selon l'invention est à la portée de l'Homme Du Métier et ne sera pas plus avant décrite.

On enregistre également des informations préalables de contexte sous forme de,
Plages de valeurs résiduelles de charge de batterie du terminal mobile,
des valeurs définissant une qualité de la localisation,
des plages de valeur de quantité de mémoire restante,

La phase d'apprentissage sera maintenant décrite. On part du point A. Une information selon laquelle on commence l'apprentissage d'un nouveau chemin est entrée par un utilisateur du terminal mobile 2 ainsi qu'une information relative au niveau de qualité avec lequel on veut enregistrer le chemin. Une indication est également entrée pour discriminer un chemin linéaire correspondant à un parcours entre un point A et un point B d'un chemin sinueux correspondant à une aire. Ces informations sont entrées par l'intermédiaire d'un interface du terminal mobile. Un premier enregistrement des fréquences reçues et de leur niveau de réception est effectué et enregistré. On enregistre une information distinguant l'identité de la cellule serveuse. On enregistre la valeur des coefficients de sélection de cellule serveuse C1 et C2. Dans le programme ici décrit, ce premier enregistrement est arbitrairement déclaré enregistrement remarquable.

Ainsi un échantillon du premier enregistrement ou généralement d'un groupe remarquable, contient pour chaque station reçue, une identité globale de la station, une valeur du niveau de réception, une indication par exemple sous forme de la valeur d'un bit selon laquelle la cellule est serveuse ou non (La cellule est dite serveuse lorsqu'elle est effectivement utilisée pour une liaison radiotéléphonique à l'instant considéré). Le groupe d'échantillons est identifié par exemple par un numéro, un pour le premier, r pour le groupe remarquable d'échantillons de rang r, par une durée écoulée depuis le début de l'enregistrement, 0 pour le premier enregistrement, la durée écoulée depuis le début du parcours pour le groupe remarquable d'échantillons de rang r, et enfin par une valeur des coefficients C1 et C2 utilisés pour la sélection de la cellule serveuse.

Dans une première implémentation, le groupe d'échantillons courant est stocké en mémoire tampon. Si la comparaison au dernier groupe remarquable ne conduit pas à déclarer ce groupe comme remarquable, il est effacé et remplacé par le groupe d'échantillons suivants, sinon il devient groupe remarquable et est copié dans la mémoire permanente des groupes remarquables Cette manière permet de minimiser la place mémoire utilisée.

Dans une deuxième implémentation, tous les échantillons sont stockés, et les groupes remarquables sont dotés d'un drapeau. Le drapeau de signalisation de groupe remarquable est destiné à être utilisé pour procéder par exemple en fin de phase d'apprentissage ou périodiquement au cours de la phase d'apprentissage à l'effacement des groupes ordinaires d'échantillons.

En fonction du niveau de qualité avec lequel on veut enregistrer le chemin à parcourir et de la charge batterie restante, le programme détermine une fréquence avec laquelle des échantillons suivants seront enregistrés. On enregistre l'échantillon suivant à un instant dépendant de la fréquence ainsi déterminée. Pour chaque groupe d'échantillons enregistré,

On détermine s'il s'agit d'un enregistrement remarquable ou ordinaire et pour cela,
on identifie les stations reçues,
on compare le niveau de réception reçu pour le groupe courant d'échantillons avec le niveau reçu pour la même station pour le groupe remarquable précédent d'échantillons. Si pour un pourcentage minimum c% des stations reçues à la fois lors de l'enregistrement du groupe remarquable précédent d'échantillons et pour le groupe courant la différence de niveau en pourcentage entre le niveau enregistré pour le groupe remarquable d'échantillons précédent et le niveau enregistré pour le groupe courant d'échantillons est inférieure à un seuil prédéterminé, le groupe courant d'échantillons est déclaré ordinaire, sinon il est déclaré remarquable. Les valeurs du seuil et de c dépendent du niveau de réception pour la fréquence considérée, un groupe courant d'échantillons déclaré remarquable peut être marqué par un drapeau.

On remarque que dans la phase d'apprentissage qui vient d'être décrite, le premier groupe d'échantillons est déclaré remarquable et que les autres groupes remarquables sont obtenus par des comparaisons entre le groupe courant d'échantillons et le groupe remarquable précédent.

Selon une variante de réalisation de la phase d'apprentissage, on peut enregistrer un nombre prédéterminé i de groupes d'échantillons. Le nombre i est un nombre qui est au minimum égal au nombre de groupes pour lequel il est estimé que l'on doit disposer d'un groupe remarquable. Le nombre i peut n'être fixé que par sa valeur minimum, sa valeur réelle étant fixée de façon logicielle en fonction de la place disponible dans la mémoire d'exploitation et de la situation dans l'espace de contexte. On fait des comparaisons sur les i groupes de niveaux pour les fréquences dont les niveaux apparaissent dans les i groupes, on note les groupes pour lesquels une ou plusieurs nouvelles fréquences sont apparues ou ont disparu par rapport au groupe précédent, ainsi que les valeurs des coefficients C1 et C2. On choisit les groupes remarquables parmi les i groupes selon la méthode de sélection de la présente invention, en effectuant des itérations en augmentant ou diminuant les seuils pour diminuer ou augmenter si besoin le nombre de groupes remarquables figurant parmi les i groupes...

Après les enregistrements de groupes remarquables de la façon indiquée ci-dessus on dispose sur les i enregistrements d'un certain nombre de groupes remarquables.

On compte alors les nombres de groupe ordinaires de groupes subsistant entre les différents intervalles entre groupes remarquables consécutifs et si un nombre de groupes ordinaires dans l'un de ces intervalles est supérieur à un seuil, qui est prédéterminé en fonction du coefficient de qualité, alors on examine à nouveau les niveaux des différentes fréquences reçues dans cet intervalle, ainsi que les valeurs des coefficients C1 et C2, et l'on ajoute dans l'intervalle un groupe remarquable basé sur le résultat de cette comparaison.

On renouvelle les mêmes opérations sur i autres enregistrements si une entrée indiquant la fin du parcours d'apprentissage n'a pas été reçue au travers de l'interface.

A la fin de la phase d'apprentissage on dispose d'un enregistrement de groupes remarquables.

Ces groupes remarquables vont être utilisés pour reconnaître que le terminal mobile se trouve ou non sur le chemin à parcourir lors de la phase d'exploitation.

En phase d'exploitation, l'application de suivi de chemin est démarrée soit manuellement par l'utilisateur du mobile ou un autre utilisateur relié au mobile à travers le réseau, soit automatiquement par un programme de gestion d'agenda de suivi de chemin qui réveille l'application avec l'identifiant du chemin à contrôler au jour et heure voulus, ce programme de gestion se trouvant sur le mobile, sur un serveur ou sur un autre mobile relié au mobile à travers le réseau. Au cours de la phase d'exploitation, le terminal mobile parcours le trajet prédéfini. Cette phase d'exploitation comporte
a)- un enregistrement périodique de groupes de Pⱼ échantillons d'exploitation, de valeurs de fréquence et de niveaux de réception associés à ces valeurs de fréquence, de l'identité des cellules dont proviennent les fréquences reçues, cette identité étant déterminée par les informations de corrélation préalablement enregistrées, l'identité de la cellule serveuse, les niveaux des coefficients C1 et C2. Le nombre Pⱼ d'échantillons est égal au nombre de fréquences reçues lors de l'enregistrement d'exploitation de rang j. La périodicité est de préférence la même que lors de la phase d'apprentissage. Elle peut cependant être différente, notamment fixée en fonction de la situation actuelle de contexte et des données préalables de contexte.

L'environnement radio correspondant à chaque groupe d'échantillons enregistré au cours de la phase d'exploitation est comparé à celui d'un ou éventuellement de plusieurs groupes remarquables acquis lors de la phase d'apprentissage et mémorisé dans la mémoire d'exploitation. Cet ensemble de groupes remarquables peut être composé de :
tous les groupes remarquables enregistrés du chemin à parcourir. Ce cas correspond à celui décrit en liaison avec la figure 3, où l'on recherche si le terminal mobile est à l'intérieur d'une aire prédéfinie,
ou bien au premier groupe remarquable du trajet enregistré et si le résultat n'est pas positif, c'est à dire s'il ne correspond pas à un résultat de comparaison permettant d'aboutir à une indication selon laquelle le terminal mobile est sur le trajet, on compare de plus le groupe courant au groupe remarquable de rang 2 et éventuellement à chacun des groupes remarquables allant du rang 2 au rang 2 + s. Ce cas correspond au cas où le top départ aurait été donné avec retard. Il est ainsi vérifié que le terminal se trouve sur le chemin à parcourir, mais pas nécessairement au début de ce chemin.

Si une comparaison du groupe courant est positive pour un groupe remarquable de rang r il est supposé que le terminal mobile se trouve entre le groupe remarquable de rang r et le groupe remarquable de rang r+1. Lorsque la comparaison d'un groupe d'échantillons avec le groupe de rang r cesse d'être positive, on fait la comparaison avec le groupe de rang r+1 et éventuellement avec les groupes de rang r+1+s, jusqu'à retrouver une comparaison positive.

On recommence alors le suivi du chemin à parcourir pour le groupe pour lequel une comparaison positive a eu lieu.

Ainsi on voit que le nombre s de groupes remarquables avec lesquels on compare le groupe courant en phase d'exploitation est une fonction du décalage temporel admissible entre l'instant réel de départ et l'indication de ce départ au terminal ou au réseau, et une fonction des écarts de vitesse de parcours entre les vitesses de parcours en phases d'acquisition et d'exploitation. Si la comparaison aux s+1 ou tous les groupes remarquables suivant le cas ne permet pas de conclure à une indication positive de présence du terminal mobile en un point du chemin à parcourir, et selon la qualité de service on peut :
Soit conclure immédiatement que le terminal mobile ne se trouve pas sur le chemin à parcourir, soit noter une indication de non présence sur le parcours. L'indication de non présence sur le parcours est dans le mode préféré de réalisation complétée par le rang q du dernier enregistrement remarquable avec lequel une comparaison d'un groupe courant a été positive.

Ensuite, Un nombre p de comparaisons à tout ou partie des groupes remarquables est effectué. Si toutes les comparaisons sont négatives, on conclut que le terminal ne se trouve pas sur le chemin, sinon, on reprend le suivi de chemin à partir de la première comparaison positive. p est fonction de la qualité de service demandée.

Alternativement, on recommence les comparaisons pour un ou plusieurs groupes courants suivants. La comparaison d'un groupe courant suivant immédiatement un groupe courant pour lequel une indication de non présence sur le parcours a été enregistrée est faite avec tous les groupes remarquables de préférence en partant du groupe remarquable de rang q du dernier enregistrement remarquable avec lequel une comparaison d'un groupe courant a été positive. Si une comparaison positive est obtenue, le ou les groupes remarquables pour lesquels la comparaison est positive sont notées et une indication positive de présence est enregistrée pour le groupe courant suivi des rangs des groupes remarquables pour lesquels une comparaison positive a été obtenue. La comparaison est recommencée ainsi pour h groupes courants consécutifs suivant un groupe courant pour lequel aucune indication de présence sur le chemin à parcourir n'a été obtenue.

Après l'enregistrement des résultats des comparaisons des h groupes courants consécutifs on regarde si un rapport entre le nombre des indications positives et le nombre h des groupes est supérieur à un seuil prédéterminé, s'il ne l'est pas on conclut à une non présence du terminal mobile sur le chemin à parcourir. Si le rapport est supérieur au seuil prédéterminé on regarde si dans la succession des groupes ayant conduit à une indication positive il existe une progression cohérente du rang des groupes remarquables. Une progression du rang des groupes remarquables est dite cohérente si on retrouve le même groupe remarquable pour tous les groupes ayant conduit à une indication positive, ou si on observe une progression de la valeur du rang des groupes remarquables de même sens que la progression du rang des h groupes courants. Si une telle configuration existe alors il est décidé que la partie mobile est sur le parcours. Les indications négatives sont effacées. Les comparaisons des groupes courants sont reprise avec le groupe remarquable de rang le plus élevé de la progression.

Si la progression du rang des groupes remarquables n'est pas cohérente mais erratique, c'est à dire si par exemple on ne trouve pour les indications positives des h groupes, que des rangs de groupes remarquables ni constant, ni progressant de façon régulière, mais par exemple augmentant puis diminuant, ou diminuant de façon constante, on conclut que les indications positives sont dues à des coïncidences et il est déclaré que le terminal mobile ne se trouve pas ou ne progresse pas de la façon attendue sur le chemin à parcourir.

Une description des résultats de comparaison entre un groupe courant enregistré au cours de la phase d'exploitation et un groupe remarquable conduisant à une indication positive de présence ou à une indication négative sera maintenant effectuée. Un résultat positif conduit à une indication de présence positive. Lorsqu'aucun résultat de comparaison entre un groupe d'échantillons courant et un groupe remarquable n'est positif on obtient une indication négative de présence.

Le résultat de la comparaison entre un groupe courant d'échantillons et un groupe remarquable est en phase d'exploitation, positif, si les mêmes critères qui ont été utilisés en phase d'apprentissage pour l'acquisition des points remarquables, ne sont pas vérifiés. Autrement dit, si selon la combinaison de conditions retenue en phase d'apprentissage, un groupe courant d'échantillons a été déclaré non ordinaire, c'est à dire remarquable, en phase d'exploitation la reconnaissance qu'un point est ordinaire selon ces mêmes critères conduira à ce qui est appelé un résultat positif de comparaison. Un tel résultat positif constitue une indication positive de présence sur le chemin à parcourir.

Dans le mode de réalisation ici décrit les valeurs des pourcentage c%, et seuil % sont ajustés automatiquement en fonction du niveau de réception. Pour un niveau de réception comprise entre 10 et 25, un seuil typique suit une courbe de la famille suivante (Nombre de stations, famille de valeurs de seuil typique en % de variation) : (2, 3-5%), (3, 7-20%), (4, 20-40%), (7, 35-60%).

Il a été vu plus haut que dans le mode de réalisation particulier ici décrit le procédé comporte une phase préalable d'enregistrement de données de corrélation et de données de contexte. Ces données de contexte contiennent un coefficient relatif à la qualité du service. Dans ce cas, les valeurs des pourcentages a% et b% sont ajustées en tenant compte également de la valeur du coefficient relatif à la qualité du service.

Il convient de noter que selon le procédé, lors de la phase d'apprentissage, le premier groupe courant enregistré dans une zone d'ombre, c'est à dire une zone pour laquelle aucune station n'est reçue, est un groupe remarquable puisque le nombre de station identiques reçu sera inférieur au seuil fixé. De même le premier groupe d'échantillons enregistré après la sortie de la zone d'ombre sera un groupe remarquable puisque le pourcentage de fréquences différentes par rapport au groupe remarquable précédent sera supérieur au pourcentage fixé. Dans le mode préféré de réalisation du procédé selon l'invention, lorsque le nombre de fréquences reçu devient égal à 0, un compteur de groupes d'échantillons enregistrés est enclenché. Lorsque le nombre de fréquence reçues est de nouveau différent de 0, le compteur est arrêté. Selon l'invention si un nombre q présent dans le compteur est supérieur à une valeur fixée prédéterminée, alors une alarme est lancée selon laquelle la zone d'ombre est trop grande.

Le nombre q peut être fixé ou être calculé en fonction de la valeur de service présente dans les informations de contexte.

Les informations de zone d'ombre peuvent être collectées. Sur la base de l'information collectée par les groupes remarquables d'entrée et sortie de zone d'ombre, et à travers l'usage des informations de la base de données des stations, la localisation géographique des zones d'ombre peut être déterminée, ce qui permet à un opérateur d'identifier la présence et le lieu des zones d'ombre et d'ainsi améliorer la couverture de son réseau grâce aux utilisateurs d'une application utilisant la méthode proposée, qui deviennent tous ainsi des testeurs de la qualité de service du réseau.

Ainsi selon ce mode de réalisation de l'invention, on tient un compte du nombre de fréquences reçues pour chacun des groupes courants d'échantillons et que si ce nombre tombe à 0, dénotant que l'on se trouve dans une zone d'ombre du réseau de téléphonie on incrémente un compteur des groupes d'échantillons courants pour lesquels ce nombre est égal à 0 et que après le premier groupe d'échantillons courants pour lequel le nombre de fréquences reçues est supérieur à 0, on émet en direction d'un opérateur du réseau un message de détection de zone d'ombre.

L'acquisition des chemins peut être faite par un ou des terminaux autres que celui ou ceux utilisés dans la phase d'exploitation. Les chemins acquis sont communiqués, par exemple par le biais du même réseau radio, au serveur ou terminaux en charge de la phase d'exploitation. Cette configuration permet par exemple aux directeurs de magasin d'une chaîne de magasins d'enregistrer avec leur téléphone mobile une aire correspondant à la proximité de leur magasin. La description des zones est ensuite téléchargée sur les mobiles de clients potentiels intéressés par le biais du réseau. Ensuite, une application sur le mobile se réveille à intervalles réguliers, échantillonne l'environnement réseau puis compare le groupe d'échantillons obtenu aux différents groupes remarquables téléchargés, selon la méthode de l'invention. Si une des comparaisons est positive, l'application envoie un message à un serveur qui renvoie en retour au mobile en proximité d'un magasin de l'information sur les promotions en cours.

Ainsi selon ce mode de réalisation et d'utilisation de l'invention, des points remarquables couvrant une aire prédéterminée sont enregistrés, la phase exploitation du procédé de l'invention est réveillée de façon périodique, par exemple entre certaines heures, et des informations sont transmises au terminal mobile si l'application du procédé selon l'invention conduit à considérer que le terminal mobile se trouve dans ladite aire.

Dans le mode de réalisation préféré, il est de plus prévu de prendre en compte les évolutions du réseau qui peuvent intervenir entre la fin de la phase d'apprentissage et l'instant courant.

Ces évolutions sont généralement de trois sortes :
- Changement d'identifiant local des cellules participant au réseau, par exemple : couple (canal, BSIC) du réseau GSM, qui n'est unique que dans une petite région géographique
- Addition de nouvelles cellules,
- Retrait de cellules existantes.

Le procédé proposé s'adapte aux changements d'identifiants locaux de la manière suivante :
Dans la phase d'apprentissage, pour chaque groupe remarquable, une aire de proximité de la cellule identifiée par son identifiant global est définie à partir de ses coordonnées géographiques (xₐ,yₐ). Ces coordonnées sont accessibles dans les informations enregistrées au préalable. Dans cette aire, les identifiants locaux des autres cellules qui constituent des groupes d'échantillons sont uniques et grâce aux informations enregistrées au préalable les identifiants globaux de ces cellules sont ajoutés à chacun des échantillons du groupe. En pratique pour les cas des réseaux GSM et GPRS, l'aire de proximité peut être définie par exemple par un disque de rayon 6 km ou par un carré de 6 km de côté dont le centre est la cellule identifiée par son identifiant global.

Dans la phase d'exploitation, tous les identifiants locaux des identifiants globaux du trajet considéré peuvent être mis à jour à partir des mises à jour d'une base de donnée des informations du réseau pour mettre à jour les informations préalables enregistrées. Ainsi pour un changement d'identifiant local la mise à jour est effectuée par une connexion aux informations de réseau diffusée sur le réseau.

Si lors de la phase d'exploitation, une comparaison entre un groupe courant d'échantillons et un groupe remarquable est positive mais qu'il est constaté lors de la comparaison qu'une ou plusieurs nouvelles cellules sont reçues, alors ces nouvelles cellules font l'objet d'échantillon additionnels ajoutés au groupe remarquable avec lequel la comparaison du groupe courant est faite, assurant ainsi la maintenance dudit groupe remarquable. De façon optionnelle, une vérification de la base de donnée de réseau peut être effectuée :
- Si les nouvelles cellules sont référencées dans la base de donnée de réseau mais que leur localisation dans la base n'est pas en proximité du chemin à parcourir, une indication d'anomalie est émise ,

Si, en phase d'exploitation la comparaison entre un groupe d'échantillons courant et un groupe remarquable est positive et si de plus lors de cette comparaison une ou plusieurs cellules, vues en phase d'apprentissage, ne sont pas vues en phase d'exploitation, alors ces cellules peuvent être supprimées des informations du chemin à parcourir enregistré, assurant ainsi la maintenance de celui-ci. De façon optionnelle, une vérification de la base de données réseau peut être effectuée : si les cellules non vues sont toujours présentes dans la base, une anomalie est signalée.

Une variante du procédé selon l'invention sera maintenant décrite. Il a été vu plus haut que dans le mode actuel de réalisation, le procédé est implémenté sous forme d'un logiciel dans une carte SIM de la partie mobile d'un téléphone mobile participant au réseau GSM. En un point géographique couvert par le réseau, le nombre de stations qui peuvent être reçues peut aller jusqu'à 32. Les informations sur les fréquences, sous forme de numéros de canaux et les niveaux de réception ou la valeur des coefficients C1, C2, ne sont accessibles à la carte SIM que pour un petit nombre de ces fréquences qui sont effectivement reçues, par exemple de l'ordre de sept ou moins. Par contre un faible déplacement, ou un simple temps d'attente, peut suffire à changer l'identité de stations qui sont accessibles à la carte SIM. Ainsi par exemple à un instant tl, la carte SIM enregistrera six stations S1 à S6. Quelques secondes ou quelques mètres plus loin, il est possible que l'identité et les niveaux qui seront transmis à la carte SIM concerne les stations S1 à S4 et deux autres stations S7 et S8. Cette particularité n'est pas nécessairement limitée au réseau GSM. La variante de réalisation de l'invention qui va être décrite met à profit cette particularité pour augmenter la fiabilité des indications de présence ou absence.

Selon cette variante, au lieu de comparer entre eux des groupes d'échantillons, on compare entre eux des ensembles de groupes d'échantillons en rafale. Pour cela, au cours de la phase d'exploitation ou au cours de la phase d'apprentissage ou au cours à la fois des phases d'exploitation et d'apprentissage, pour chaque enregistrement périodique de routine d'exploitation de groupes d'échantillons on effectue un ensemble d'enregistrement en rafale. Un enregistrement en rafale est un enregistrement qui est effectué de façon périodique mais avec une fréquence beaucoup plus grande, et donc une période beaucoup plus courte que la période d'enregistrement de routine. Il convient toutefois que la période d'échantillonnage de rafale reste supérieure à la période de re-selection du réseau. Cette période est en GSM de l'ordre de cinq secondes. Par exemple si la période d'enregistrement de routine est de 60 secondes, la période d'enregistrement en rafale pourra être de l'ordre de cinq à dix secondes.

Pour chacun des groupes d'échantillons d'une rafale, on enregistre comme dans le cas d'un enregistrement périodique de routine, les fréquences reçues, les niveaux de réception correspondant à ces fréquences, et éventuellement les coefficients C1, C2.

Pour chacune des fréquences se trouvant au moins une fois dans l'un des q groupes, on détermine au moins un niveau Rx qui peut être l'un parmi un niveau minimum de réception Rmin, un niveau maximum de réception Rmax, et un niveau moyen Rm. Le niveau minimum de réception Rmin, par exemple est pour une fréquence que l'on retrouve par exemple dans un nombre 1 inférieur à q, des q groupes d'échantillons de la rafale, le niveau de réception qui est le plus faible des 1 niveaux. Le niveau maximum de réception Rmax est le niveau le plus élevé des 1 niveaux. Le niveau moyen Rm est obtenu en faisant la moyenne des 1 niveaux. On peut faire de même pour les coefficients C1 et C2. Les niveaux ainsi obtenus sont des niveaux Rx ou Cx, qui sont des niveaux de la rafale.

On enregistre cette ou ces valeurs de niveau de réception Rx ou Cx pour ladite rafale.

Si par exemple, au cours de la phase d'apprentissage, l'enregistrement des groupes remarquables est effectué en rafale, on va pour la détermination d'un ensemble de groupes remarquables suivant comparer la valeur Rx de l'ensemble courant de groupes en rafale avec la valeur Rx de même nature de l'ensemble de groupes remarquables précédent. Cela suppose comme dans le cas général qu'un premier ensemble de groupes remarquables a été déterminé.

Un ensemble de groupes courants en rafale est déclaré ordinaire par opposition à remarquable par comparaison au dernier ensemble de groupes remarquables enregistré si l'une au moins ou une combinaison des conditions ci-après est remplie :
selon une première condition de comparaison d'ensembles de groupes en rafale,
   - le nombre de fréquences reçues pour l'ensemble de groupes courants qui sont identiques à des fréquences reçues pour ledit ensemble remarquable de groupes précédent, est supérieur à un pourcentage a% fixé,
selon une seconde condition,
   - le nombre de fréquences reçues pour l'ensemble de groupes courants, qui sont différentes des fréquences reçues pour ledit ensemble remarquable de groupes précédent de comparaison est inférieur audit pourcentage b% fixé,
selon une troisième condition,
   - il existe pour un nombre t inférieur ou égal au nombre de fréquences présentes à la fois dans l'ensemble de groupes en rafale courant et dans l'ensemble de groupes en rafale remarquable précédent, une variation de niveau de réception inférieure en pourcentage à un seuil prédéterminé d% entre un niveau de réception associé au groupe courant et un niveau de réception de même nature associé audit groupe remarquable de comparaison.

Lorsque à la fois des phases d'apprentissage et d'exploitation font l'objet d'enregistrements de groupes en rafale, les comparaisons de niveau entre un groupe courant et l'ensemble remarquable précédent de groupes se font entre niveaux de même nature. Par exemple un niveau Rₘᵢₙ courant avec un niveau Rₘᵢₙ de l'ensemble remarquable.

Lorsque l'un seulement des enregistrement se fait en avec ensemble de groupe en rafale, il est admis que la valeur de niveau associé à une fréquence selon l'enregistrement de routine est à la fois la valeur minimum, moyenne et maximum.

De préférence, le niveau de seuil d% et le nombre t sont une fonction de la valeur du niveau de réception Rx de comparaison du groupe remarquable de comparaison.

## Revendications

1. Procédé de suivi d'un chemin à parcourir par un terminal mobile, capable de recevoir des ondes électromagnétiques, ces ondes étant émises par une ou plusieurs stations d'émission, le suivi de chemin étant réalisé par une plate-forme d'exploitation, **caractérisé en ce que** le procédé comporte :
A) une phase d'apprentissage, cette phase d'apprentissage comportant
a)- un parcours initial de reconnaissance du chemin, au cours duquel est effectué, exclusivement sur le chemin, un enregistrement périodique de routine d'apprentissage dans une mémoire de parcours accessible par la plate-forme d'exploitation, de groupes successifs d'échantillons, un échantillon comportant au moins une valeur de chacune des fréquences reçues par le terminal mobile à chacune des positions géographiques où se trouve le terminal mobile au moment de cet enregistrement périodique, et un niveau de réception associé à cette fréquence, un enregistrement périodique de rang k comportant un groupe k de pₖ échantillons, le nombre entier pₖ étant égal au nombre des fréquences différentes reçues lors dudit enregistrement,
b)- une comparaison des niveaux reçus entre un groupe de pₙ échantillons enregistrés lors d'un échantillonnage courant de rang n eL au moins l'un des groupes précédents d'échantillons enregistrés de rang inférieur à n, un critère de comparaison permettant de discriminer des groupes remarquables d'échantillons et des groupes ordinaires d'échantillons,
étant entendu qu'en phase d'apprentissage, le critère de discrimination permettant de distinguer un groupe remarquable d'un groupe ordinaire est le suivant : un groupe est ordinaire si l'une au moins ou une combinaison des conditions suivantes résultant de la comparaison entre un groupe d'échantillons de rang n et le dernier groupe remarquable identifié d'échantillons est vérifiée :
selon une première condition,
- le nombre de fréquences reçues pour le groupe courant qui sont identiques à des fréquences reçues pour ledit groupe remarquable, est supérieur à un pourcentage a% fixé,
selon une seconde condition
- le nombre de fréquences reçues pour le groupe courant, qui sont différentes des fréquences reçues pour ledit groupe remarquable de comparaison est inférieur audit pourcentage b% fixé,
selon une troisième condition
- il existe un pourcentage de variation de niveau de réception inférieur à un seuil en pourcentage prédéterminé entre un niveau de réception associé à une fréquence du groupe courant et un niveau de réception associé à la même dite fréquence de l'un des échantillons dudit enregistrement remarquable de comparaison et ceci pour un pourcentage minimum c% fixé des fréquences présentes à la fois dans l'échantillon remarquable et dans l'échantillon courant, si le groupe n'a pas été trouvé ordinaire, il est remarquable ;
B) une phase d'exploitation au cours de laquelle le terminal mobile parcours le trajet prédéfini cette phase d'exploitation comportant
a)- un enregistrement périodique de routine d'exploitation de groupes de Pⱼ échantillons d'exploitation, un échantillon d'exploitation comportant au moins une valeur de chacune des fréquences reçues par le terminal mobile à chacune des positions géographiques où se trouve le terminal mobile au moment de cet enregistrement périodique d'exploitation, et un niveau de réception associé à cette fréquence, le nombre Pⱼ d'échantillons étant égal au nombre de fréquences reçues lors de l'enregistrement d'exploitation de rang j,
b)- une comparaison de chaque groupe d'échantillons d'exploitation avec au moins l'un des groupes remarquables d'échantillons, la comparaison produisant un résultat de comparaison positif si selon le critère de comparaison retenu pour la phase d'apprentissage, le résultat de comparaison conduit à déterminer que ledit groupe courant aurait été classé comme ordinaire,
c)- une indication de présence relative au fait que le terminal mobile se trouve ou non sur le chemin à parcourir en cas de résultat de comparaison positif, et une indication d'absence dans le cas contraire, cette indication étant enregistrée,
d)- une exploitation de une ou plusieurs des indications de présence ou absence enregistrées pour décider si le terminal mobile se trouve ou non sur le chemin à parcourir.

2. Procédé selon la revendication 1 **caractérisé en ce que** le ou les groupe (s) de rang inférieur à n avec lequel ou lesquels une comparaison du groupe de rang n est effectuée pour déterminer que ledit groupe de rang n est ou non un groupe remarquable est ou sont un groupe ou des groupes remarquables, un premier groupe remarquable de rang r le plus petit ayant été déterminé autrement que par une comparaison avec des groupes remarquables.

3. Procédé selon la revendication 2 **caractérisé en ce que** le premier groupe remarquable est le premier groupe enregistré.

4. Procédé selon la revendication 3 **caractérisé en ce que** la détermination d'un groupe remarquable est effectuée par une comparaison entre le groupe courant et le groupe remarquable précédent d'échantillons, ayant le rang r de groupe remarquable le plus élevé.

5. Procédé selon la revendication 1 **caractérisé en ce que** la détermination d'un groupe remarquable est effectuée par des comparaisons successives deux à deux des échantillons des i derniers groupes consécutifs enregistrés le dernier groupe d'échantillons enregistré ayant un rang n, et le premier des i derniers groupes ayant le rang n-i, un ou plusieurs groupes remarquables pouvant résulter de cette comparaison.

6. Procédé selon l'une des revendications 1 à 5 **caractérisé en ce que**, il comporte :
- une phase préparatoire d'enregistrement dans une mémoire d'exploitation accessible par la plate-forme d'exploitation, d'informations de corrélation relatives à chacune des stations d'émission qui peuvent être reçues à l'intérieur d'une grande zone géographique englobant au minimum une petite zone géographique dans laquelle se trouve le chemin à parcourir, ces informations permettant seule ou éventuellement en combinaison avec d'autres informations de corrélation préenregistrées, de corréler sur le chemin à parcourir, une fréquence reçue avec l'identité de la station d'émission de cette fréquence, et au cours de la phase d'apprentissage
- une corrélation pour les groupes remarquables d'échantillons entre les niveaux et les fréquences reçues d'une part, et les informations de corrélation enregistrées au cours de la phase préalable, cette corrélation permettant de relier chaque fréquence et niveau associé dudit groupe remarquable avec une identité de station les ayant émis.

7. Procédé selon la revendication 1 **caractérisé en ce que** la phase d'apprentissage est étendue à plusieurs passages sur le chemin après l'enregistrement initial, et si au cours de l'un des passages un groupe courant qui compte tenu de la variation de son rang après le dernier groupe remarquable enregistré devrait être un groupe ordinaire est détecté comme remarquable en fonction des critères utilisés, l'utilisateur est interrogé pour savoir s'il se trouve ou non sur le chemin :
s'il confirme qu'il se trouve bien sur le chemin à parcourir, l'utilisateur est invité à cocher une réponse,
si la réponse est affirmative, une ou plusieurs des valeurs parmi le seuil de variation de niveau ou a% ou b% ou c% sont modifiés afin que la comparaison entre le dernier groupe remarquable et ledit groupe courant conduise à un point ordinaire.

8. Procédé selon la revendication 6 **caractérisé en ce que**, l'une des informations de corrélation reçues par le terminal mobile est une information relative à l'identité d'une station qui rend un service particulier au terminal mobile.

9. Procédé selon la revendication 8 **caractérisé en ce que**
- le critère de discrimination entre un groupe ordinaire et un groupe remarquable est le suivant : un groupe d'échantillons est ordinaire si l'une au moins ou une combinaison des conditions suivantes résultant de la comparaison entre un groupe d'échantillons courant et le groupe remarquable d'échantillons précédent est remplie :
selon une première condition
- le nombre de fréquences reçues pour le groupe courant qui sont identiques à des fréquences reçues pour ledit groupe remarquable, est supérieur à un pourcentage a% fixé,
selon une seconde condition
- le nombre de fréquences reçues pour le groupe courant, qui sont différentes des fréquences reçues pour ledit groupe remarquable de comparaison est inférieur audit pourcentage b% fixé,
selon une troisième condition
- il existe un pourcentage de variation de niveau de réception inférieur à un seuil en pourcentage prédéterminé, entre un niveau de réception associé à une fréquence du groupe courant et un niveau de réception associé à la même dite fréquence de l'un des échantillons dudit enregistrement remarquable de comparaison et ceci pour un pourcentage minimum c% fixé des fréquences présentes à la fois dans l'échantillon remarquable et dans l'échantillon courant, si le groupe n'a pas été trouvé ordinaire, il est remarquable,
selon une quatrième condition
il est constaté pour le groupe courant que l'identité de la station rendant le service particulier n'est pas identique à l'identité de celle qui le rendait pour le groupe remarquable de comparaison.

10. Procédé selon l'une des revendications 1 à 9 **caractérisé en ce que** l'on enregistre au cours de la phase d'apprentissage des valeurs de un ou plusieurs coefficients dont la valeur ou la variation de valeur est prise en compte par le réseau de téléphonie mobile pour déterminer un changement d'une station rendant un service particulier au terminal mobile.

11. Procédé selon la revendication 10 **caractérisé en ce que** figure en outre parmi les conditions conduisant seule ou en combinaison avec une ou plusieurs des autres conditions prévues à la revendication 10, à déclarer qu'un groupe d'enregistrement est remarquable, une variation supérieure à un seuil fixé de un ou plusieurs desdits coefficients dont la valeur ou la variation de valeur est prise en compte par le terminal mobile pour déterminer un changement d'une station rendant un service particulier au terminal mobile.

12. Procédé selon la revendication 6 **caractérisé en ce que** au cours de la phase préalable on enregistre des valeurs ou des plages de valeurs de paramètres définissant ensemble un espace de contexte, et que au cours des phases d'apprentissage ou d'exploitation ou dans une phase préliminaire de configuration,
on détermine une situation actuelle dans l'espace de contexte et que
l'on modifie la fréquence des enregistrements suivants en fonction de la situation actuelle dans l'espace de contexte.

13. Procédé selon la revendication 12 **caractérisé en ce que** les valeurs ou plages de valeurs sont choisies parmi un ou plusieurs des paramètres de contexte ci après,
des plages de valeur résiduelle de charge de batterie,
des valeurs définissant une qualité de la localisation,
des plages de valeur de quantité de mémoire restante

14. Procédé selon l'une des revendications 12 ou 13 **caractérisé en ce que** la fréquence des enregistrements suivants est modifiée en tenant compte en outre du nombre de fréquences reçues lors d'un enregistrement courant et de leurs niveaux respectifs.

15. Procédé selon l'une des revendications 1 à 14 **caractérisé en ce que** lors de la phase d'apprentissage, on enregistre lors de l'acquisition de groupes remarquables d'échantillons une durée écoulée depuis le début du parcours.

16. Procédé selon la revendication 1 ou la revendication 15 **caractérisé en ce que** au cours de l'étape la de la phase d'apprentissage, pour chaque enregistrement périodique de groupes d'échantillons on effectue un ensemble d'enregistrements en rafale, ledit ensemble d'enregistrements en rafale comportant un nombre q de groupes d'échantillons enregistrés périodiquement selon une période de rafale telle que le produit de la période de rafale par le nombre q d'enregistrements dudit ensemble d'enregistrements en rafale soit intérieur à la moitié de la période de routine, et **en ce que** pour chacun des ensembles de groupes d'échantillons en rafale,
- on enregistre, les fréquences reçues, les niveaux de réception correspondant à ces fréquences,
- pour chacune des fréquences se trouvant au moins une fois dans l'un des ensembles de q groupes, on détermine au moins un niveau Rₓ qui peut être l'un parmi un niveau minimum de réception Rₘᵢₙ, un niveau maximum de réception Rₘₐₓ, et un niveau moyen Rₘ et l'on enregistre cette ou ces valeurs de niveau de réception pour ledit ensemble de groupes,
et **en ce que**
un premier ensemble de groupes ayant été déclaré remarquable,
un ensemble courant de groupes en rafale est déclaré ordinaire, c'est à dire non remarquable, par comparaison au dernier ensemble remarquable de groupe enregistré si l'une au moins ou une combinaison des conditions ci-après est remplie :
selon une première condition de comparaison d'ensembles de groupes en rafale,
- le nombre de fréquences reçues pour l'ensemble courant de groupes qui sont identiques à des fréquences reçues pour ledit ensemble remarquable de groupes, est supérieur à un pourcentage a% fixé,
selon une seconde condition,
- le nombre de fréquences reçues pour l'ensemble courant de groupes, qui sont différentes des fréquences reçues pour ledit ensemble remarquable de groupes de comparaison est inférieur audit pourcentage b% fixé,
selon une troisième condition,
- il existe pour un nombre t inférieur ou égal au nombre de fréquences présentes à la fois dans l'ensemble courant de groupes en rafale et dans l'ensemble remarquable précédent de groupes en rafale, une variation de niveau de réception inférieure en pourcentage à un seuil prédéterminé d% entre un niveau de réception associé à l'ensemble courant et un niveau de réception de même nature associé audit ensemble remarquable de comparaison.

17. Procédé selon la revendication 16 **caractérisé en ce que** le niveau de seuil d% et le nombre t sont une fonction de la valeur du niveau de réception Rₓ de comparaison du groupe remarquable de comparaison.

18. Procédé selon l'une des revendications 6 à 17 **caractérisé en ce que** dans la phase préalable on détermine le choix de combinaison des conditions qui si elles sont remplies conduisent seule ou en combinaison avec d'autres à la détermination d'un point remarquable ainsi que les valeurs des pourcentages a b et c% en fonction :
- de la qualité du service,
- des caractéristiques du réseau radio,
- de la longueur moyenne des chemins,
- de la place mémoire disponible,
- de la durée de vie restante moyenne de la batterie du mobile

19. Procédé selon la revendication 15 ou la revendication 16 en tant qu'elle dépend de la revendication 15 **caractérisé en ce que** au cours de la phase d'exploitation un résultat de comparaison entre un groupe courant eL le groupe remarquable précédent est considéré comme positif non seulement si selon le critère de comparaison retenu pour la phase d'apprentissage, le résultat de comparaison conduit à déterminer que ledit groupe courant aurait été classé comme ordinaire, mais que de plus, le temps écoulé depuis le début du parcours d'exploitation pour arriver audit enregistrement remarquable avec lequel le groupe courant est comparé est égal, avec une marge prédéterminée en plus ou en moins, au temps écoulé lors de la phase d'apprentissage depuis le début du parcours d'apprentissage pour arriver à ce même enregistrement remarquable.

20. Procédé selon l'une des revendications 1, ou 15 à 19 **caractérisé en ce que** au cours de la phase d'exploitation, pour chaque enregistrement périodique de routine d'exploitation de groupes d'échantillons on effectue un ensemble d'enregistrements en rafale, ledit ensemble d'enregistrements en rafale comportant un nombre q de groupes d'échantillons enregistrés périodiquement selon une période de rafale telle que le produit de la période de rafale par le nombre q d'enregistrements dudit ensemble en rafale soit inférieur à la moitié de la période de routine d'exploitation, et **en ce que** pour chacun des ensembles de groupes d'échantillons d'une rafale,
- on enregistre, les fréquences reçues, les niveaux de réception correspondant à ces fréquences,
- pour chacune des fréquences se trouvant au moins une fois dans l'un des ensembles de q groupes, on détermine au moins un niveau Rₓ qui peut être l'un parmi un niveau minimum de réception Rₘᵢₙ, un niveau maximum de réception Rₘₐₓ, et un niveau moyen Rₘ et l'on enregistre cette ou ces valeurs de niveau de réception pour ledit ensemble de groupes, et **en ce que** un résultat de comparaison est positif les critères de comparaison appliqués lors de la phase d'apprentissage auraient conduit pour cette comparaison à un groupe ordinaire d'échantillons, les niveaux de réception d'un groupe d'échantillons remarquable qui n'a pas été déterminé par un enregistrement d'apprentissage en rafale étant considéré dans ce cas comme étant simultanément un niveau maximum, minimum, et moyen.

21. Procédé selon l'une des revendications précédentes **caractérisé en ce que** si aucun des résultats de comparaison n'est positif, on recommence la comparaison du groupe courant d'échantillons avec chacun des autres groupes remarquables une comparaison positive entre le groupe courant et l'un des groupes remarquables conduisant à une indication de présence et **en ce que** si aucune des comparaisons ne conduit à un résultat positif il est produit une indication de non présence.

22. Procédé selon l'une des revendications 1 à 20 **caractérisé en ce que** si aucun des résultats de comparaison n'est positif, on recommence la comparaison du groupe courant d'échantillons avec chacun des autres groupes remarquables, une comparaison positive entre le groupe courant et l'un des groupes remarquables conduisant à une indication de présence et **en ce que** si aucune des comparaisons ne conduit à un résultat positif, on recommence la comparaison pour un nombre h de groupes d'exploitation suivants avec les groupes remarquables et que une indication de présence est délivrée si un rapport entre un nombre de comparaisons positives résultant de la comparaison avec les h groupes d'échantillons d'exploitation pour lesquels une comparaison a été faite et h est supérieur à un seuil prédéterminé, une indication de non présence étant délivré dans le cas contraire.

23. Procédé selon l'une des revendications 1 à 20 **caractérisé en ce que** si aucun des résultats de comparaison n'est positif, on recommence la comparaison du groupe courant d'échantillons avec chacun des autres groupes remarquables, une comparaison positive entre le groupe courant et l'un des groupes remarquables conduisant à une indication de présence et **en ce que** si aucune des comparaisons ne conduit à un résultat positif, on recommence la comparaison pour un nombre h de groupes d'exploitation suivants avec les groupes remarquables et que une indication de présence est délivrée si un rapport entre un nombre de comparaisons positives résultant de la comparaison avec les h groupes d'échantillons d'exploitation pour lesquels une comparaison a été faite et h est supérieur à un seuil prédéterminé, et si de plus il est constaté une progression cohérente du rang des groupes remarquables pour lesquels une comparaison positive a été enregistrée, une indication de non présence étant délivré dans le cas contraire.

24. Procédé selon l'une des revendications 21 ou 23 **caractérisé en ce que** le nombre h est définit en prenant en compte une valeur de service se trouvant dans les données de contexte enregistrées au préalable.

25. Procédé selon la revendication 1 **caractérisé en ce que**, il comporte une étape d'effacement des enregistrements de groupes ordinaires d'échantillons.

26. Procédé selon la revendication 1 **caractérisé en ce que**, au cours de la phase d'apprentissage on tient un compte du nombre de fréquences reçues pour chacun des groupes courants d'échantillons eL que si ce nombre tombe à 0, dénotant que l'on se trouve dans une zone d'ombre du réseau de téléphonie on incrémente un compteur des groupes d'échantillons courants pour lesquels ce nombre est égal à 0 et que après le premier groupe d'échantillons courants pour lequel le nombre de fréquences reçues est supérieur à 0, on émet en direction d'un opérateur du réseau un message de détection de zone d'ombre.

27. Programme informatique comprenant des moyens de code de programme informatique adaptés pour exécuter toutes les étapes selon l'une des revendications 1 à 26 lorsque ledit programme est exécuté sur un ordinateur, qui peut se trouver entre autres sur un terminal mobile ou un serveur.

28. Programme informatique selon la revendication 27 incorporé sur un support exploitable par ordinateur.

29. Programme informatique selon la revendication 24 incorporé sur plusieurs supports, chaque support contenant des instructions exploitables par ordinateur, ces instructions étant adaptées pour exécuter une partie des étapes selon l'une des revendications 1 à 26, et des instructions de liaison pour envoyer des données ou des instructions vers l'extérieur.

30. Support ou ensemble de supports de données numérique, contenant un programme pour exécuter les étapes de la revendications 1.

31. Utilisation du procédé selon l'une des revendications 1 à 26 **caractérisé en ce que** des points remarquables couvrant une aire prédéterminée sont enregistrés, la phase exploitation du procédé est réveillée de façon périodique, et des informations sont transmises au terminal mobile, si l'application du procédé selon l'invention conduit à considérer que le terminal mobile se trouve dans ladite aire prédéterminée.

## Claims

1. A method for a mobile terminal to follow a path to be travelled, capable of receiving electromagnetic waves, these waves being transmitted by one or more transmission stations, the path following being carried out by an operational platform, **characterized in that** the method comprises:
A) a learning phase, this learning phase comprising:
a) - an initial recognition trip along the path, during which, solely on the path, a periodic learning-routine recording of successive groups of samples is saved in a trip memory accessible to the operating platform, a sample comprising at least one value of each of the frequencies received by the mobile terminal at each of the geographic positions where the mobile terminal is located at the time of that periodic recording, and a reception level associated with that frequency, a periodic rank recording comprising a group k of pₖ samples, the whole number pₖ being equal to the number of different frequencies received during said recording,
b) - a comparison of the levels received between a group of pₙ samples recorded during a current sampling with rank n and at least one of the preceding groups of recorded samples with rank less than n, a comparison criterion making it possible to distinguish noteworthy groups of samples and ordinary groups of samples,
it being understood that during the learning phase, the distinguishing criterion that makes it possible to tell a noteworthy group from an ordinary group is as follows: a group is ordinary if at least one or a combination of the following data resulting from comparing a group of samples with rank n and the last identified noteworthy group of samples is verified:
according to a first condition,
- the number of frequencies received for the current group that are identical to frequencies received for said noteworthy group, is above a fixed percentage a%, according to a second condition
- the number of frequencies received for the current group that are different from the frequencies received for said comparison noteworthy group is less than said fixed percentage b%,
according to a third condition
- there is a percentage of variation in reception levels that is less than a predetermined percentage threshold between a reception level associated with a frequency of the current group, and a reception level associated with said same frequency of one of the samples of said comparison noteworthy recording, this being true for a fixed minimum percentage c% of frequencies present both in the noteworthy sample and in the current sample; if the group was not found to be ordinary, it is noteworthy;
B) an operating phase during which the mobile terminal travels the predefined course, this operating phase comprising:
a) - a periodic operating-routine recording of groups of pⱼ operating samples, an operating sample comprising at least one value of each of the frequencies received by the mobile terminal at each of the geographic positions where the mobile terminal is located at the time of that periodic operating recording, and a reception level associated with that frequency, the number pⱼ of samples being equal to the number of frequencies received during the operating recording with rank j,
b) - a comparison of each group of operational samples with at least one of the noteworthy sample groups, the comparison producing a positive comparison result if, according to the comparison criterion adopted for the learning phase, the comparison result leads to a determination that said current group would have been classified as ordinary,
c) - a presence indication related to the fact that the mobile terminal is or is not located on the path to be travelled, in the event of a positive comparison result, and an absence indication if otherwise, this indication being recorded,
d) - a use of one or more of the recorded presence or absence indications to decide whether the mobile terminal is or is not located on the path to be travelled.

2. A method according to claim 1, **characterized in that** the group(s) with rank less than n with which a comparison of the group with rank n is performed in order to determine that said group with rank n is or is not a noteworthy group is or are a noteworthy group or groups, a first noteworthy group with the lowest rank r having been determined by means other than a comparison with noteworthy groups.

3. A method according to claim 2, **characterized in that** the first noteworthy group is the first recorded group.

4. A method according to claim 3, **characterized in that** the determination of a noteworthy group is performed by a comparison between the current group and the preceding noteworthy group of samples, having the highest rank r of a noteworthy group.

5. A method according to claim 1, **characterized in that** the determination of a noteworthy group is performed by successive two-to-two comparisons of the samples from the last i consecutive groups recorded, the last group of recorded samples having a rank n and the first of the last i groups having a rank n-i, one or more noteworthy groups potentially resulting from that comparison.

6. A method according to one of the claims 1 to 5 **characterized in that** it comprises:
- a preparatory phase of saving, in an operational memory accessible to the operating platform, correlation information related to each of the transmission stations that may be received within a large zone encompassing at least one small geographic area in which the path to be travelled is located, this information alone, or potentially in combination with other prerecorded correlation information, making it possible to correlate with the path to be travelled, a frequency received with the identity of that frequency's transmission station, and during the learning phase
- a correlation for the noteworthy groups of samples between the received levels and frequencies, and the correlation information saved during the prior phase, this correlation making it possible to connect each frequency and associated level of said noteworthy group with a station identity that had transmitted them.

7. A method according to claim 1, **characterized in that** the learning phase is extended to multiple trips on the path after the initial recording, and if during one of the trips a current group that, given the variation in its rank after the last noteworthy group saved, should be an ordinary group is detected as being noteworthy based on the criteria that is used, the user is queried in order to learn whether or not he or she is on the path:
if he or she confirms that he or she is on the path to be travelled, the user is prompted to tick a response,
if the response is affirmative, one or more of the values from among the variation threshold with level a% or b% or c% are changed in order for the comparison between the last noteworthy group and said current group to lead to an ordinary point.

8. A method according to claim 6, **characterized in that** one of the pieces of correlation information received by the mobile terminal is a piece of information related to the identity of a station that provides a particular service to the mobile terminal.

9. A method according to claim 8, **characterized in that**
- the distinguishing criterion between an ordinary group and a noteworthy group is as follows: a group of samples is ordinary if at least one, or a combination, of the following conditions resulting from the comparison between a current group of samples and the preceding noteworthy group of samples is fulfilled:
according to a first condition
- the number of frequencies received for the current group that are identical to frequencies received for said noteworthy group is above a fixed percentage a%,
according to a second condition
- the number of frequencies received for the current group that are different from the frequencies received for said comparison noteworthy group is below said fixed percentage b%,
according to a third condition
- there is a percentage of variation in reception levels that is less than a predetermined percentage between a reception level associated with a frequency of the current group and a reception level associated with the same said frequency of one of the samples of said comparison noteworthy recording, this being true for a fixed minimum percentage c% of frequencies present in both the noteworthy sample and in the current sample; if the group was not found to be ordinary, it is noteworthy,
according to a fourth condition
it is observed for the current group that the identity of the station providing the particular service is not the same as the identity of the one that provided it for the comparison noteworthy group.

10. A method according to one of the claims 1 to 9 **characterized in that** during the learning phase, values of one or more coefficients are recorded, whose value or variation in value is taken into account by the mobile telephony network to determine a change in a station providing a particular service to the mobile terminal.

11. A method according to claim 10, **characterized in that** among the conditions that alone or in combination with one or more of the other conditions set forth in claim 10 lead to declaring that a recording group is noteworthy, an additional one is a variation greater than a fixed threshold of one or more of said coefficients whose value or variation in value is taken into account by the mobile terminal to determine a change in a mobile station providing a service to the mobile terminal.

12. A method according to claim 6, **characterized in that** during the prior phase, values or ranges of values of parameters that together define a context space are saved, and that during the learning or operating phases or in a preliminary configuration phase,
a current situation in the context space is determined, and
the frequency of the following recordings is altered based on the current situation in the context space.

13. A method according to claim 12, **characterized in that** the values or ranges of values are chosen from among one or more of the context parameters below,
residual battery-charge value ranges,
values defining a quality of the location,
remaining memory quantity value ranges,

14. A method according to one of the claims 12 or 13, **characterized in that** the frequency of the following recordings is modified, additionally taking into account the number of frequencies received during a current recording, and their respective levels.

15. A method according to one of the claims 1 to 14 **characterized in that** during the learning phase, while acquiring noteworthy groups of samples, a duration elapsed since the start of the trip is recorded.

16. A method according to claim 1 or claim 15, **characterized in that** during step 1 a of the learning phase, for each periodic recording of groups of samples, a set of burst recordings is made, said set of burst recordings comprising a number q of groups of samples periodically prerecorded in accordance with a burst period, such that the product of the burst period multiplied by the number q of burst recordings is less than half the routine period, and **in that** for each of the sets of groups of burst recordings,
- the received frequencies, and the reception levels corresponding to those frequencies, are recorded,
- for each of the frequencies located at least once in one of the sets of q groups, at least one level Rₓ is determined, which may be one of the following: a minimum reception level Rₘᵢₙ, a maximum reception level Rₘₐₓ, and an average level Rₘ, and **in that** this or these reception level value(s) are saved for said set of groups,
and **in that**:
a first set of groups having been declared noteworthy,
a current set of burst groups is declared ordinary, i.e. not noteworthy, through comparison to the last noteworthy set of recorded groups if at least one or a combination of the conditions below is fulfilled:
according to a first comparison condition of sets of burst groups,
- the number of frequencies received for the current set of groups that are identical to frequencies received for said noteworthy set of groups, is greater than a fixed percentage a%,
according to a second condition
- the number of frequencies received for the current set of groups that are different from frequencies received for said noteworthy set of comparison groups is less than said fixed percentage b%,
according to a third condition
- For a number t less than or equal to the number of frequencies present both in the current set of burst groups and in the preceding noteworthy set of burst groups, a variation in reception level that, expressed as a percentage, is less than a predetermined threshold d% between a reception level associated with the current set and a reception level of the same type associated with said comparison noteworthy set.

17. A method according to claim 16, **characterized in that** the level of d% and the number t are a function of the value of the comparison reception level Rₓ of the comparison noteworthy group.

18. A method according to one of the claims 6 to 17 **characterized in that** during the prior phase, the choice of a combination of conditions that, if fulfilled, lead alone or in combination with others to the determination of a noteworthy point, as well as values of percentages a, b and c% as a function of:
- the quality of the service,
- the characteristics of the radio network,
- the average length of the paths,
- the memory capacity available,
- the remaining average lifespan of the mobile's battery

19. A method according to claim 15 or claim 16 when it depends on claim 15, **characterized in that** during the operating phase, a comparison result between a current group and the preceding noteworthy group is considered to be positive not only if according to the comparison criterion adopted for the learning phase, the comparison result leads to a determination that said current group would have been classified as ordinary, but additionally, if the time elapsed since the start of the operating trip in order to reach said noteworthy recording with which the current group is compared is equal, with a predetermined margin more or less, to the time elapsed during the learning phase since the start of the learning trip in order to reach that same noteworthy recording.

20. A method according to one of the claims 1, or 15 to 19, **characterized in that** during the operating phase, for each periodic operating-routine recording of groups of samples, a set of burst recordings is performed, said set of burst recordings comprising a number q of groups of samples periodically recorded in accordance with a burst period, such that the product of the burst period multiplied by the number q of recordings of said burst set is less than half the operating-routing period, and **in that** for each of the sets of groups of samples of a burst,
- the received frequencies, and the reception levels corresponding to those frequencies, are recorded,
- for each of the frequencies located at least once in one of the sets of g groups, at least one level Rₓ is determined that may be one of the following: a minimum reception level Rₘᵢₙ, a maximum reception level Rₘₐₓ, and an average level Rₘ, and **in that** this or those reception level values are recorded for said set of groups, and **in that** a comparison result is positive if the comparison criteria applied during the learning phase would have lead for that comparison to an ordinary group of samples, the reception levels of a noteworthy group of samples that had not been determined by a burst learning recording being in this case considered to simultaneously be a maximum, minimum, and average level.

21. A method according to one of the preceding claims, **characterized in that** if none of the comparison results is positive, the comparison of the current group of samples is begun anew with each of the other noteworthy groups, a positive comparison between the current group and one of the noteworthy groups leading to a presence indication, and **in that** if none of the comparisons leads to a positive result, a non-presence indication is delivered.

22. A method according to one of the claims 1 to 20, **characterized in that** if none of the comparison results is positive, the comparison of the current group of samples with each of the other noteworthy groups is begun anew, with a positive comparison between the current group and one of the noteworthy groups leading to a presence indication, and **in that** if none of the comparisons leads to a positive result, the comparison is begun anew for a number h of following operating groups compared with the noteworthy groups, and a presence indication is delivered if a ratio between a number of positive comparisons resulting from the comparison with the h groups of operating samples for which a comparison was made and h is greater than a predetermined threshold, a non-presence indication being delivered if otherwise.

23. A method according to one of the claims 1 to 20, **characterized in that** if none of the comparison results is positive, the comparison of the current group of samples with each of the other noteworthy groups is begun anew, a positive comparison between the current group and one of the noteworthy groups leading to a presence indication, and **in that** if none of the comparisons leads to a positive result, the comparison is begun anew for a number h of following operating groups compared with the noteworthy groups, and a presence indication is delivered if a ratio between a number of positive comparisons resulting from the comparison with the h groups of operating samples for which a comparison was made and h is greater than a predetermined threshold, and if furthermore a consistent progression has been observed in the rank of the noteworthy groups for which a positive comparison was recorded, a non-presence indication being delivered if otherwise.

24. A method according to one of the claims 21 or 23, **characterized in that** the number h is defined by taking into account a service value found in the context data recorded beforehand.

25. A method according to claim 1, **characterized in that** it comprises a step of erasing the recordings of ordinary groups of samples.

26. A method according to claim 1, **characterized in that** during the learning phase, the number of frequencies received for each of the current sample groups is taken into account, and that if that number falls to 0, denoting that the current location is a dark zone of the telephony network, a counter of the current sample groups for which that number is equal to 0 is incremented, and that after the first current sample group for which the number of frequencies received is greater than 0, a dark zone detection message is sent to an operator of the network.

27. A computer program, comprising computer program code means that are adapted to execute all the steps according to one of the claims 1 to 26 when said program is executed on a computer, which may be located on a mobile terminal or a server, among other things.

28. A computer program according to claim 27, incorporated on a computer-usable medium.

29. A computer program according to claim 24, incorporated on multiple media, each medium containing computer-usable instructions, these instructions being adapted to execute some of the steps according to one of the claims 1 to 26, and linking instructions in order to send data or instructions outward.

30. A digital data medium or set of media, containing a program to execute the steps of claim 1.

31. The use of the method according to one of the claims 1 to 26, **characterized in that** noteworthy points covering a predetermined area are recorded, the operating phase of the method is periodically resumed, and information is transmitted to the mobile terminal, if the application of the inventive method leads to the assumption that the mobile terminal is located in said predetermined area.

## Patentansprüche

1. Verfahren zur Verfolgung einer von einem mobilen Endgerät, welches fähig ist, elektromagnetische Wellen zu empfangen, zurückzulegenden Wegstrecke, wobei diese Wellen von einer oder mehreren Emissionsstationen ausgesendet werden, wobei die Verfolgung der Wegstrecke durch eine Auswerteplattform erfolgt, **dadurch gekennzeichnet, dass** das Verfahren umfasst:
A) Eine Anlernphase, wobei diese Anlernphase umfasst:
a) - eine anfängliche Strecke zur Wegstreckenerkennung, während welcher, ausschließlich auf der Wegstrecke, eine periodische routinemäßige Anlernspeicherung in einem Streckenspeicher, der über die Auswerteplattform zugänglich ist, von aufeinanderfolgenden Abtastwertgruppen erfolgt, wobei ein Abtastwert mindestens einen Wert einer jeden der Frequenzen, die in einer jeden geografischen Position, in der sich das mobile Endgerät zum Zeitpunkt dieser periodischen Speicherung befindet, an dem mobilen Endgerät empfangen werden, und einen mit dieser Frequenz assoziierten Empfangspegel enthält, wobei eine periodische Speicherung k-ter Ordnung eine Gruppe k von pₖ Abtastwerten umfasst, wobei die ganze Zahl pₖ der Anzahl der verschiedenen während der besagten Speicherung empfangenen Frequenzen entspricht,
b) - einen Vergleich der Pegel, die zwischen einer Gruppe von pₙ während einer aktuellen Abtastung n-ter Ordnung gespeicherten Abtastwerten und mindestens einer der gespeicherten vorherigen Abtastwertgruppen einer Ordnung, die niedriger als n ist, empfangen werden, wobei es ein Vergleichskriterium ermöglicht, die markanten Abtastwertgruppen von den normalen Abtastwertgruppen zu unterscheiden,
wobei davon ausgegangen wird, dass während der Anlernphase das Unterscheidungskriterium, welches das Unterscheiden einer markanten Gruppe von einer normalen Gruppe ermöglicht, das folgende ist: Eine Gruppe ist normal, wenn mindestens eine oder eine Kombination der folgenden Bedingungen, die sich aus dem Vergleich einer Abtastwertgruppe n-ter Ordnung mit der letzten identifizierten markanten Abtastwertgruppe ergeben, bestätigt wird:
Gemäß einer ersten Bedingung,
- die Anzahl der für die aktuelle Gruppe empfangenen Frequenzen, die mit den für die besagte markante Gruppe empfangenen Frequenzen identisch sind, ist höher als ein festgelegter Prozentsatz a%,
gemäß einer zweiten Bedingung,
- die Anzahl der für die aktuelle Gruppe empfangenen Frequenzen, die sich von den für die besagte markante Vergleichsgruppe empfangenen Frequenzen unterscheiden, ist niedriger als der besagte festgelegte Prozentsatz b%,
gemäß einer dritten Bedingung,
- es besteht eine prozentuale Änderung des Empfangspegels, welche unter einem vorgegebenen Prozentanteil-Grenzwert liegt, zwischen einem mit einer Frequenz der aktuellen Gruppe assoziierten Empfangspegel und einem mit derselben besagten Frequenz eines der Abtastwerte der besagten markanten Vergleichsspeicherung assoziierten Empfangspegel, und zwar für einen festgelegten minimalen Prozentanteil c% der Frequenzen, die sowohl in dem markanten Abtastwert als auch in dem aktuellen Abtastwert vorhanden sind, und wenn die Gruppe nicht als normal befunden wurde, ist dieser markant;
B) eine Auswertephase, während welcher das mobile Endgerät die vorgegebene Wegstrecke zurücklegt, wobei diese Auswertephase umfasst:
a) - Eine periodische routinemäßige Auswertespeicherung von Gruppen von Pⱼ Auswerteabtastwerten, wobei ein Auswerteabtastwert mindestens einen Wert einer jeden der in einer jeden der geografischen Position, in welchern sich das mobile Endgerät zum Zeitpunkt dieser periodischen Auswertespeicherung befindet, an dem mobilen Endgerät empfangenen Frequenzen und einen mit dieser Frequenz assoziierten Empfangspegel enthält, wobei die Anzahl Pⱼ der Abtastwerte der Anzahl der während der Auswertespeicherung j-ter Ordnung empfangenden Frequenzen entspricht,
b) - einen Vergleich einer jeden Gruppe von Auswerteabtastwerten mit mindestens einer der markanten Abtastwertgruppen, wobei der Vergleich ein positives Vergleichsergebnis ergibt, wenn das Vergleichsergebnis gemäß dem für die Anlernphase berücksichtigten Vergleichskriterium dazu führt, zu bestimmen, dass die besagte aktuelle Gruppe als normal eingestuft worden wäre,
c) - eine Angabe der Präsenz in Bezug auf die Tatsache, dass sich das mobile Endgerät im Fall eines positiven Vergleichsergebnisses auf der zurückzulegenden Wegstrecke befindet oder nicht, und eine Angabe der Abwesenheit im gegenteiligen Fall, wobei diese Angabe gespeichert wird,
d) - eine Auswertung einer oder mehrerer der gespeicherten Präsenz- oder Abwesenheitangaben, um zu entscheiden, ob sich das mobile Endgerät auf der zurückzulegenden Wegstrecke befindet oder nicht.

2. Verfahren nach Anspruch 1, **dadurch gekennzeichnet, dass** die Gruppe oder Gruppen, deren Ordnung niedriger als n ist, mit welcher oder welchen ein Vergleich der Gruppe n-ter Ordnung vorgenommen wird, um zu ermitteln, ob die besagte Gruppe n-ter Ordnung eine markante Gruppe ist oder nicht, eine markante Gruppe ist bzw. markante Gruppen sind, wobei eine erste markante Gruppe der kleinsten Ordnung r auf eine andere Weise als durch einen Vergleich mit markanten Gruppen bestimmt worden ist.

3. Verfahren nach Anspruch 2, **dadurch gekennzeichnet, dass** die erste markante Gruppe die erste gespeicherte Gruppe ist.

4. Verfahren nach Anspruch 3, **dadurch gekennzeichnet, dass** die Bestimmung einer markanten Gruppe durch einen Vergleich zwischen der aktuellen Gruppe und der vorherigen markanten Abtastwertgruppe, welche die höchste Ordnung r der markanten Gruppen aufweist, erfolgt.

5. Verfahren nach Anspruch 1, **dadurch gekennzeichnet, dass** die Bestimmung einer markanten Gruppe durch aufeinanderfolgende Seite-an-Seite-Vergleiche der Abtastwerte der i letzten aufeinanderfolgenden gespeicherten Gruppen, wobei die letzte gespeicherte Abtastwertegruppe eine Ordnung n hat, mit der ersten der i letzten Gruppen der Ordnung n-i erfolgt, wobei sich eine oder mehrere markante Gruppen aus diesem Vergleich ergeben kann bzw. können.

6. Verfahren nach einem der Ansprüche 1 bis 5, **dadurch gekennzeichnet, dass** es umfasst:
- eine Vorbereitungsphase der Speicherung, in einem über die Auswerteplattform zugänglichen Auswertespeicher, von Korrelationsinformationen in Bezug auf eine jede der Emissionsstationen, die innerhalb eines weiten geografischen Bereichs, welcher mindestens einen kleinen geografischen Bereich, in welchem sich die zurückzulegende Wegstrecke befindet, einschließt, empfangen werden können, wobei es diese Informationen einzeln oder gegebenenfalls in Kombination mit anderen vorgespeicherten Korrelationsinformationen ermöglichen, auf der zurückzulegenden Wegstrecke eine empfangene Frequenz mit der Identität der Emissionsstation dieser Frequenz zu korrelieren, und während der Anlernphase
- Eine Korrelation für die markanten Abtastwertgruppen zwischen den Pegeln und den empfangenen Frequenzen, einerseits, und den während der vorherigen Phase gespeicherten Korrelationsinformationen, wobei es diese Korrelation ermöglicht, jede Frequenz und jeden assoziierten Pegel der besagten markanten Gruppe mit einer Identität der Station, die diese ausgegeben hat, zu verbinden.

7. Verfahren nach Anspruch 1, **dadurch gekennzeichnet, dass** die Anlernphase nach der anfänglichen Speicherung auf mehrere Durchläufe der Wegstrecke ausgeweitet wird, und dass, wenn während eines dieser Durchläufe eine aktuelle Gruppe, die angesichts der Änderung ihrer Ordnung nach der letzten gespeicherten markanten Gruppe eine normale Gruppe sein sollte, gemäß den angewendeten Kriterien als markant erkannt wird, der Benutzer befragt wird, um festzustellen, ob er sich auf der Wegstrecke befindet oder nicht:
wenn er bestätigt, dass er sich auf der zurückzulegenden Strecke befindet, wird der Benutzer aufgefordert, eine Antwort anzukreuzen,
wenn die Antwort positiv ist, wird bzw. werden ein Wert bzw. mehrere Werte unter den Grenzwerten der Pegeländerung a% oder b% oder c% geändert, damit der Vergleich zwischen der letzten markanten Gruppe und der besagten aktuellen Gruppe zu einem normalen Punkt führt.

8. Verfahren nach Anspruch 6, **dadurch gekennzeichnet, dass** eine der an dem mobilen Endgerät empfangenen Korrelationsinformationen eine Information in Bezug auf die Identität einer Station, welche einen bestimmten Dienst an das mobile Endgerät bereitstellt, ist.

9. Verfahren nach Anspruch 8, **dadurch gekennzeichnet, dass**
- das Unterscheidungskriterium zwischen einer normalen Gruppe und einer markanten Gruppe das folgende ist: Eine Abtastwertgruppe ist normal, wenn mindestens eine oder eine Kombination der folgenden Bedingungen, die sich aus dem Vergleich zwischen einer aktuellen Abtastwertgruppe und der vorherigen markanten Abtastwertgruppe ergeben, erfüllt ist:
Gemäß einer ersten Bedingung,
- die Anzahl der für die aktuelle Gruppe empfangenen Frequenzen, die mit den für die besagte markante Gruppe empfangenen Frequenzen identisch sind, ist höher als ein festgelegter Prozentsatz a%,
gemäß einer zweiten Bedingung,
- die Anzahl der für die aktuelle Gruppe empfangenen Frequenzen, die sich von den für die besagte markante Vergleichsgruppe empfangenen Frequenzen unterscheiden, ist niedriger als der besagte festgelegte Prozentsatz b%,
gemäß einer dritten Bedingung,
- es besteht eine prozentuale Änderung des Empfangspegels, welche unter einem vorgegebenen Prozentanteil-Grenzwert liegt, zwischen einem mit einer Frequenz der aktuellen Gruppe assoziierten Empfangspegel und einem mit derselben besagten Frequenz eines der Abtastwerte der besagten markanten Vergleichsspeicherung assoziierten Empfangspegel, und zwar für einen festgelegten minimalen Prozentanteil c% der Frequenzen, die sowohl in dem markanten Abtastwert als auch in dem aktuellen Abtastwert vorhanden sind, und wenn die Gruppe nicht als normal befunden wurde, ist dieser markant;
gemäß einer vierten Bedingung,
für die aktuelle Gruppe festgestellt wird, dass die Identität der Station, welche den bestimmten Dienst bereitstellt, nicht mit der Identität der Station, welche diesen für die markante Vergleichsgruppe bereitstellte, identisch ist.

10. Verfahren nach einem der Ansprüche 1 bis 9, **dadurch gekennzeichnet, dass** man während der Anlernphase Werte eines oder mehrerer Koeffizienten speichert, deren Wert oder Wertänderung von dem Mobilfunknetz berücksichtigt wird, um einen Wechsel einer Station, welche einen bestimmten Dienst an das mobile Endgerät bereitstellt, zu bestimmen.

11. Verfahren nach Anspruch 10, **dadurch gekennzeichnet, dass** die Bedingungen, die einzeln oder in Kombination mit einer oder mehreren der anderen unter Anspruch 10 vorgesehenen Bedingungen dazu führen, dass eine Speicherungsgruppe als markant erklärt wird, weiterhin eine Änderung, die einen festgelegten Grenzwert überschreitet, eines oder mehrerer der besagten Koeffizienten, deren Wert oder Wertänderung von dem mobilen Endgerät berücksichtigt wird, umfassen.

12. Verfahren nach Anspruch 6, **dadurch gekennzeichnet, dass** man während der vorherigen Phase Werte oder Wertebereiche von Parametern, welche gemeinsam einen Kontextraum definieren, speichert, und dass man während der Anlern- oder Auswertephase oder während einer vorbereitenden Konfigurationsphase
eine aktuelle Situation in dem Kontextraum ermittelt, und
die Frequenz der folgenden Speicherungen gemäß der aktuellen Situation im Kontextraum ändert.

13. Verfahren nach Anspruch 12, **dadurch gekennzeichnet, dass** die Werte oder Wertebereiche unter einem oder mehreren der folgenden Kontextparameter gewählt werden:
Restwertebereiche der Batterieladung,
Werte, die eine Lokalisierungsqualität definieren,
Wertebereiche der verbleibenden Speichermenge.

14. Verfahren nach einem der Ansprüche 12 oder 13, **dadurch gekennzeichnet, dass** die Frequenz der nachfolgenden Speicherungen weiterhin unter Berücksichtigung der Anzahl der während einer aktuellen Speicherung empfangenen Frequenzen und deren jeweiligen Pegel geändert wird.

15. Verfahren nach einem der Ansprüche 1 bis 14, **dadurch gekennzeichnet, dass** man während der Anlernphase bei der Erfassung von markanten Abtastwerten eine seit Beginn der Strecke vergangene Zeit speichert.

16. Verfahren nach Anspruch 1 oder Anspruch 15, **dadurch gekennzeichnet, dass** man während Schritt 1a der Anlernphase für jede periodische Speicherung von Abtastwertgruppen einen Satz von schnell aufeinanderfolgenden Speicherungen vornimmt, wobei der besagte Satz von schnell aufeinanderfolgenden Speicherungen eine Anzahl q von gemäß einer Salvenperiode periodisch gespeicherten Abtastwerten enthält, wobei das Produkt der Salvenperiode, multipliziert mit der Anzahl q der Speicherungen des besagten Satzes von schnell aufeinanderfolgenden Speicherungen, niedriger ist als die Hälfte der Routineperiode, und dass man für einen jeden der Sätze von Salven-Abtastwertgruppen,
- die empfangenen Frequenzen und die diesen Frequenzen entsprechenden Empfangspegel speichert,
- für eine jede der Frequenzen, die sich mindestens ein Mal in einem der Sätze von q Gruppen befinden, mindestens einen Pegel Rₓ bestimmt, der ein Pegel der Gruppe bestehend aus einem minimalen Empfangspegel Rₘᵢₙ, einem maximalen Empfangspegel Rₘₐₓ und einem durchschnittlichen Pegel Rₘ sein kann, und dass man diesen Wert bzw. diese Werte des Empfangspegels für den besagten Satz von Gruppen speichert,
und dass:
ein erster Satz von Gruppen als markant befunden wurde,
ein aktueller Satz von schnell aufeinanderfolgenden Gruppen anhand des Vergleichs mit dem letzten gespeicherten markanten Satz von Gruppen als normal, also als nicht markant, befunden wird, wenn mindestens eine oder eine Kombination der nachfolgenden Bedingungen erfüllt ist:
Gemäß einer ersten Vergleichsbedingung von Sätzen von schnell aufeinanderfolgenden Gruppen,
- die Anzahl der für den aktuellen Satz von Gruppen empfangenen Frequenzen, die mit den für den besagten markanten Satz von Gruppen empfangenen Frequenzen identisch sind, ist höher als ein festgelegter Prozentsatz a%,
gemäß einer zweiten Bedingung,
- die Anzahl der für den aktuellen Satz von Gruppen empfangenen Frequenzen, die sich von den für den besagten markanten Satz von Vergleichsgruppen empfangenen Frequenzen unterscheiden, ist niedriger als der besagte festgelegte Prozentsatz b%,
gemäß einer dritten Bedingung,
- es besteht für eine Anzahl t, die niedriger als die oder gleich der Anzahl der sowohl in dem aktuellen Satz von schnell aufeinanderfolgenden Gruppen als auch in dem vorherigen markanten Satz von schnell aufeinanderfolgenden Gruppen vorhandenen Frequenzen ist, eine prozentuale Änderung des Empfangspegels, welche unter einem vorgegebenen Prozentanteil-Grenzwert d% liegt, zwischen einem mit dem aktuellen Satz assoziierten Empfangspegel und einem mit demselben markanten Vergleichssatz assoziierten Empfangspegel gleicher Art.

17. Verfahren nach Anspruch 16, **dadurch gekennzeichnet, dass** der Grenzpegel d% und die Anzahl t eine Funktion des Wertes des Vergleichsempfangspegels Rₓ der markanten Vergleichsgruppe sind.

18. Verfahren nach einem der Ansprüche 6 bis 17, **dadurch gekennzeichnet, dass** man während der vorherigen Phase die Wahl der Kombination der Bedingungen, welche, wenn sie erfüllt sind, einzeln oder in Kombination mit anderen Bedingungen zur Bestimmung eines markanten Punktes führen, sowie die Werte der Prozentsätze a, b und c% in Abhängigkeit von
- der Dienstgüte,
- den Merkmalen des Funknetzes,
- der durchschnittlichen Länge der Wegstrecken
- dem verfügbaren Speicherplatz,
- der durchschnittlichen verbleibenden Lebensdauer der Batterie des mobilen Endgeräts
bestimmt.

19. Verfahren nach Anspruch 15 oder Anspruch 16, soweit er von Anspruch 15 abhängt, **dadurch gekennzeichnet, dass** während der Auswertephase ein Vergleichsergebnis zwischen einer aktuellen Gruppe und der vorherigen markanten Gruppe als positiv betrachtet wird, und zwar nicht nur, wenn das Vergleichsergebnis gemäß dem für die Anlernphase berücksichtigten Vergleichskriterium dazu führt, dass bestimmt wird, dass die besagte aktuelle Gruppe als normal eingestuft worden wäre, sondern wenn außerdem die seit Beginn der Auswertestrecke vergangene Zeit, um zu der markanten Speicherung zu gelangen, mit welcher die aktuelle Gruppe verglichen wird, unter Berücksichtigung eines vorgegebenen Spielraums von plus oder minus gleich der während der Anlernphase seit Beginn der Anlernstrecke vergangenen Zeit, um zu derselben markanten Speicherung zu gelangen, ist.

20. Verfahren nach einem der Ansprüche 1, oder 15 bis 19, **dadurch gekennzeichnet, dass** man während der Auswertephase für jede periodische routinemäßige Auswertespeicherung von Abtastwertgruppen einen Satz von schnell aufeinanderfolgenden Speicherungen vornimmt, wobei der besagte Satz von schnell aufeinanderfolgenden Speicherungen eine Anzahl q von gemäß einer Salvenperiode periodisch gespeicherten Abtastwerten enthält, wobei das Produkt der Salvenperiode, multipliziert mit der Anzahl q der Speicherungen des besagten Satzes von schnell aufeinanderfolgenden Speicherungen, niedriger ist als die Hälfte der Routine-Auswerteperiode, und dass man für einen jeden der Sätze von Salven-Abtastwertgruppen einer Salve,
- die empfangenen Frequenzen und die diesen Frequenzen entsprechenden Empfangspegel speichert,
- für eine jede der Frequenzen, welche sich mindestens ein Mal in einem der Sätze von g Gruppen befindet, mindestens einen Pegel Rₓ bestimmt, der ein Pegel gewählt aus der Gruppe bestehend aus einem minimalen Empfangspegel Rₘᵢₙ, einem maximalen Empfangspegel Rₘₐₓ und einem durchschnittlichen Pegel Rₘ sein kann, und diesen Empfangspegelwert bzw. diese Empfangspegelwerte für den besagten Satz von Gruppen speichert, und dass ein Vergleichsergebnis positiv ist, wenn die während der Anlernphase angewendeten Vergleichskriterien für diesen Vergleich zu einer normalen Abtastwertgruppe geführt hätten, wobei die Empfangspegel einer markanten Abtastwertgruppe, die nicht von einer Anlernspeicherung als Salven bestimmt wurde, in diesem Fall als simultan ein maximaler, minimaler und durchschnittlich Pegel angesehen werden.

21. Verfahren nach einem der vorstehenden Ansprüche, **dadurch gekennzeichnet, dass** man, wenn keines der Vergleichsergebnisse positiv ist, den Vergleich der aktuellen Abtastwertgruppe mit einer jeden der anderen markanten Gruppen neu beginnt, wobei ein positiver Vergleich der aktuellen Gruppe mit einer der markanten Gruppen zu einer Angabe der Präsenz führt, und dass, wenn keiner der Vergleiche zu einem positiven Ergebnis führt, eine Angabe der Abwesenheit erzeugt wird.

22. Verfahren nach einem der Ansprüche 1 bis 20, **dadurch gekennzeichnet, dass** man, wenn keines der Vergleichsergebnisse positiv ist, den Vergleich der aktuellen Abtastwertgruppe mit einer jeden der anderen markanten Gruppen neu beginnt, wobei ein positiver Vergleich der aktuellen Gruppe mit einer der markanten Gruppen zu einer Angabe der Präsenz führt, und dass man, wenn keiner der Vergleiche zu einem positiven Ergebnis führt, den Vergleich für eine Anzahl h von nachfolgenden Auswertegruppen mit den markanten Gruppen neu beginnt, und dass eine Angabe der Präsenz erzeugt wird, wenn ein Verhältnis zwischen einer Anzahl von positiven Vergleichen, welches aus dem Vergleich mit den h Auswerteabtastwertegruppen, für welche ein Vergleich vorgenommen wurde, resultiert, und h höher ist als ein vorgegebener Grenzwert, wobei im gegenteiligen Fall eine Angabe der Abwesenheit erzeugt wird.

23. Verfahren nach einem der Ansprüche 1 bis 20, **dadurch gekennzeichnet, dass** man, wenn keines der Vergleichsergebnisse positiv ist, den Vergleich der aktuellen Abtastwertgruppe mit einer jeden der anderen markanten Gruppen neu beginnt, wobei ein positiver Vergleich der aktuellen Gruppe und einer der markanten Gruppen zu einer Angabe der Präsenz führt, und dass man, wenn keiner der Vergleiche zu einem positiven Ergebnis führt, den Vergleich für eine Anzahl h von nachfolgenden Auswertegruppen mit den markanten Gruppen neu beginnt, und dass eine Angabe der Präsenz erzeugt wird, wenn ein Verhältnis zwischen einer Anzahl von positiven Vergleichen, welches aus dem Vergleich mit den h Gruppen von Auswerteabtastwerten, für die ein Vergleich vorgenommen wurden, resultiert, und h höher als ein vorgegebener Grenzwert ist, und wenn außerdem eine kohärente Steigerung der Ordnung der markanten Gruppen, für welche ein positiver Vergleich gespeichert wurde, festgestellt wird, wobei im gegenteiligen Fall eine Angabe der Abwesenheit erzeugt wird.

24. Verfahren nach einem der Ansprüche 21 oder 23, **dadurch gekennzeichnet, dass** die Anzahl h unter Berücksichtigung eines Dienstwertes, der sich in den zuvor gespeicherten Kontextdaten befindet, bestimmt wird.

25. Verfahren nach Anspruch 1, **dadurch gekennzeichnet, dass** es einen Schritt des Löschens der Speicherungen von normalen Abtastwertgruppen umfasst.

26. Verfahren nach Anspruch 1, **dadurch gekennzeichnet, dass** man während der Anlernphase die Anzahl der für eine jede der aktuellen Abtastwertgruppen empfangenen Frequenzen berücksichtigt, und wenn diese Anzahl auf 0 fällt, welches darauf hindeutet, dass man sich in einer Schattenzone des Mobilfunknetzes befindet, man einen Zähler der aktuellen Abtastwertgruppen, für welche diese Anzahl 0 entspricht, inkrementiert, und dass man nach der ersten aktuellen Abtastwertgruppe, für welche die Anzahl der empfangenen Frequenzen höher als 0 ist, eine Nachricht in Bezug auf das Erkennen einer Schattenzone an einen Netzbetreiber sendet.

27. Computerprogramm mit Programmcodemitteln, die für das Durchführen aller Schritte nach einem der Ansprüche 1 bis 26 ausgelegt sind, wenn das besagte Programm auf einem Computer ausgeführt wird, der sich unter anderem auf einem mobilen Endgerät oder auf einem Server befinden kann.

28. Computerprogramm nach Anspruch 27, welches auf einem von einem Computer lesbaren Träger installiert ist.

29. Computerprogramm nach Anspruch 24, welches auf mehreren Trägern installiert ist, wobei jeder Träger von einem Computer ausführbare Befehle, die geeignet sind, einen Teil der Schritte nach einem der Ansprüche 1 bis 26 auszuführen, sowie Verbindungsbefehle, um Daten oder Befehle nach außen zu senden, enthält.

30. Digitaler Datenträger oder Satz von digitalen Datenträgern mit einem Programm zum Ausführen der Schritte gemäß Anspruch 1.

31. Verwendung des Verfahrens nach einem der Ansprüche 1 bis 26, **dadurch gekennzeichnet, dass** markante Punkte, die einen vorgegebenen Bereich abdecken, gespeichert werden, wobei die Phase der Durchführung des Verfahrens periodisch geweckt wird, und dass Informationen an das mobile Endgerät übertragen werden, wenn die Anwendung des Verfahrens gemäß der Erfindung dazu führt, anzunehmen, dass sich das mobile Endgerät in dem besagten vorgegebenen Bereich befindet.
